(19) Europäisches Patentamt
European Patent Office
Office européen des brevets

(11) **EP 2 775 716 A1**

(12) **EUROPEAN PATENT APPLICATION**
published in accordance with Art. 153(4) EPC

(43) Date of publication:
**10.09.2014 Bulletin 2014/37**

(51) Int Cl.:
***H04N 7/32*** (0000.00)

(21) Application number: **12845589.6**

(22) Date of filing: **10.09.2012**

(86) International application number:
**PCT/JP2012/073067**

(87) International publication number:
**WO 2013/065402 (10.05.2013 Gazette 2013/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.10.2011 JP 2011239009**

(71) Applicant: **Mitsubishi Electric Corporation Tokyo 100-8310 (JP)**

(72) Inventors:
• **MORIYA, Yoshimi**
  **Tokyo 100-8310 (JP)**
• **HATTORI, Ryoji**
  **Tokyo 100-8310 (JP)**
• **ITANI, Yusuke**
  **Tokyo 100-8310 (JP)**
• **SUGIMOTO, Kazuo**
  **Tokyo 100-8310 (JP)**
• **MINEZAWA, Akira**
  **Tokyo 100-8310 (JP)**
• **SEKIGUCHI, Shunichi**
  **Tokyo 100-8310 (JP)**
• **HIWASA, Norimichi**
  **Tokyo 100-8310 (JP)**

(74) Representative: **Pfenning, Meinig & Partner GbR Patent- und Rechtsanwälte Theresienhöhe 13 80339 München (DE)**

(54) **MOVING PICTURE ENCODING DEVICE, MOVING PICTURE DECODING DEVICE, MOVING PICTURE ENCODING METHOD, AND MOVING PICTURE DECODING METHOD**

(57) A tile partitioning unit 1 that partitions an inputted image into tiles each of which is a rectangular region having a specified size and outputs the tiles is disposed, and a block partitioning unit 10 of a partition video encoding unit 3 partitions a tile outputted from the tile partitioning unit 1 into coding blocks each having a predetermined size and also partitions each of the coding blocks hierarchically until the number of hierarchical layers reaches an upper limit on the number of hierarchical layers which is determined by an encoding controlling unit 2.

FIG.1

**Description**

FIELD OF THE INVENTION

The present invention relates to a video encoding device for and a video encoding method of compression-encoding and transmitting an image, and a video decoding device for and a video decoding method of decoding encoded data transmitted thereto from a video encoding device into an image.

BACKGROUND OF THE INVENTION

Conventionally, according to international standard video encoding methods, such as MPEG (Moving Picture Experts Group) and "ITU-T H. 26x, " an inputted video frame is partitioned into square blocks which are called macroblocks, and an intra-frame prediction, an inter-frame prediction, an orthogonal transformation of a prediction error signal, quantization, an entropy encoding process, and so on are carried out on each of the macroblocks. Further, after the processes on all the macroblocks are completed and one screenful of local decoded image is generated, a process of deriving loop filter parameters, an entropy encoding process, and a process of filtering the local decoded image based on the driven parameters are carried out.

The encoding process of encoding each macroblock is based on the premise that macroblocks are processed in a raster scan order, and in the encoding process on a certain macroblock, the encoded result of a previously-processed macroblock is needed in the raster scan order. Concretely, when carrying out an inter-frame prediction, a reference to a pixel from a local decoded image of an adjacent macroblock is made. Further, in the entropy encoding process, a probability switching model used for the estimation of the occurrence probability of a symbol is shared with the previously-processed macroblock in the raster scan order, and it is necessary to refer to the mode information of an adjacent macroblock for switching between probability models.

Therefore, in order to advance the encoding process on a certain macroblock, a part or all of the process on the previously-processed macroblock has to be completed in the raster scan order. This interdependence between macroblocks is an obstacle to the parallelization of the encoding process and a decoding process. In order to solve the above-mentioned problem, nonpatent reference 1 discloses a technique of partitioning an inputted image (picture) into a plurality of rectangular regions (tiles), processing each macroblock within each tile in a raster scan order, and making it possible to carry out an encoding process or a decoding process in parallel on a per tile basis by eliminating the independence between macroblocks respectively belonging to different tiles. Each tile consists of a plurality of macroblocks, and the size of each tile can be defined by only an integral multiple of a macroblock size.

Related art document

Nonpatent reference

Nonpatent reference 1: Arild Fuldseth, Michael Horowitz, Shilin Xu, Andrew Segall, Minhua Zhou, "JCTVC-F335: Tiles", Joint Collaborative Team on Video Coding (JCT-VC) of ITU-T SG16 WP3 and ISO/IEC JTC1/SC29/WG11 6th Meeting: Torino, IT, 14-22 July, 2011

SUMMARY OF THE INVENTION

PROBLEMS TO BE SOLVED BY THE INVENTION

Because the conventional video encoding device is constructed as above, the size of each tile at the time of partitioning a picture into a plurality of tiles (rectangular regions) is limited to an integral multiple of a macroblock size. A problem is therefore that when the size of a picture is not a preset integral multiple of a macroblock size, the picture cannot be partitioned into equal tiles, and the load of the encoding process on each tile differs depending upon the size of the tile and therefore the efficiency of parallelization drops. A further problem is that when an image specified by an integral multiple of a pixel number (1920 pixels × 1080 pixels) defined for HDTV (High Definition Television), e.g., 3840 pixels × 2160 pixels or 7680 pixels × 4320 pixels, is encoded, the encoding cannot be implemented while the image is partitioned into tiles each having the HDTV size, depending upon the preset macroblock size, and therefore an input interface and equipment for use in HDTV in this device cannot be utilized.

The present invention is made in order to solve the above-mentioned problems, and it is therefore an object of the present invention to provide a video encoding device and a video encoding method capable of utilizing an input interface, equipment, etc. for use in HDTV in the above-mentioned device when the size of an inputted image is an integral multiple of the pixel number defined for HDTV. It is another object of the present invention is to provide a video encoding device and a video encoding method capable of implementing a parallel encoding process without dropping the efficiency of parallelization even when the size of an inputted image is not an integral multiple of a macroblock size. It is a further object of the present invention is to provide a video decoding device and a video decoding method that can be applied to the above-mentioned video encoding device and the above-mentioned video encoding method respectively.

MEANS FOR SOLVING THE PROBLEM

In accordance with the present invention, there is provided a video encoding device including: a tile partitioner partitioning an inputted image into tiles each of which is a rectangular region having a specified size and outputting the tiles; an encoding controller determining an upper limit on a number of hierarchical layers when a coding block which is a unit to be processed at a time when a prediction process is carried out is hierarchically partitioned, and also determining a coding mode for determining an encoding method for each coding block; a block partitioner partitioning a tile outputted from the tile partitioner into coding blocks each having a predetermined size and also partitioning each of the coding blocks hierarchically until the number of hierarchical layers reaches the upper limit on the number of hierarchical layers which is determined by the encoding controller; a prediction image generator carrying out a prediction process on a coding block obtained through the partitioning by the block partitioner to generate a prediction image in the coding mode determined by the encoding controller; and an image compressor compressing a difference image between the coding block obtained through the partitioning by the block partitioner and the prediction image generated by the prediction image generator, and outputting compressed data about the difference image, in which a variable length encoder variable-length-encodes the compressed data, which are outputted from the image compressor, and the coding mode determined by the encoding controller and also variable-length-encodes tile information showing a size of each of the tiles outputted from the tile partitioner and a position of each of the tiles in the inputted image to generate a bitstream into which encoded data about the compressed data, encoded data about the coding mode, and encoded data about the tile information are multiplexed.

ADVANTAGES OF THE INVENTION

According to the present invention, because the video encoding device includes: the tile partitioner partitioning an inputted image into tiles each of which is a rectangular region having a specified size and outputting the tiles; the encoding controller determining an upper limit on a number of hierarchical layers when a coding block which is a unit to be processed at a time when a prediction process is carried out is hierarchically partitioned, and also determining a coding mode for determining an encoding method for each coding block; the block partitioner partitioning a tile outputted from the tile partitioner into coding blocks each having a predetermined size and also partitioning each of the coding blocks hierarchically until the number of hierarchical layers reaches the upper limit on the number of hierarchical layers which is determined by the encoding controller; the prediction image generator carrying out a prediction process on a coding block obtained through the partitioning by the block partitioner to generate a prediction image in the coding mode determined by the encoding controller; and the image compressor compressing a difference image between the coding block obtained through the partitioning by the block partitioner and the prediction image generated by the prediction image generator, and outputting compressed data about the difference image, and the variable length encoder is constructed in such a way as to variable-length-encode the compressed data, which are outputted from the image compressor, and the coding mode determined by the encoding controller and also variable-length-encode the tile information showing the size of each of the tiles outputted from the tile partitioner and the position of each of the tiles in the inputted image to generate a bitstream into which encoded data about the compressed data, encoded data about the coding mode, and encoded data about the tile information are multiplexed, there is provided an advantage of being able to utilize an input interface, equipment, etc. for use in HDTV in the above-mentioned device when the size of the inputted image is an integral multiple of a pixel number defined for HDTV.

BRIEF DESCRIPTION OF THE FIGURES

[Fig. 1] Fig. 1 is a block diagram showing a video encoding device in accordance with Embodiment 1 of the present invention;
[Fig. 2] Fig. 2 is a block diagram showing the internal structure of a partition video encoding unit 3 of the video encoding device in accordance with Embodiment 1 of the present invention;
[Fig. 3] Fig. 3 is a block diagram showing a motion vector variable length encoding unit 7a which a variable length encoding unit 7 of the video encoding device in accordance with Embodiment 1 of the present invention includes therein;

[Fig. 4] Fig. 4 is a flow chart showing processing (video encoding method) carried out by the video encoding device in accordance with Embodiment 1 of the present invention;

[Fig. 5] Fig. 5 is a block diagram showing a video decoding device in accordance with Embodiment 1 of the present invention;

[Fig. 6] Fig. 6 is a block diagram showing the internal structure of a partition video decoding unit 31 of the video decoding device in accordance with Embodiment 1 of the present invention;

[Fig. 7] Fig. 7 is a block diagram showing a motion vector variable length decoding unit 30a which a variable length decoding unit 30 of the video decoding device in accordance with Embodiment 1 of the present invention includes therein;

[Fig. 8] Fig. 8 is a flow chart showing processing (video decoding method) carried out by the video decoding device in accordance with Embodiment 1 of the present invention;

[Fig. 9] Fig. 9 is an explanatory drawing showing an example in which an image having a size of 3840 pixels wide by 2160 pixels high is partitioned into four equal tiles;

[Fig. 10] Fig. 10 is an explanatory drawing showing an example in which each largest coding block is divided hierarchically into a plurality of coding target blocks;

[Fig. 11] Fig. 11(a) shows a distribution of coding target blocks and prediction blocks obtained through partitioning, and Fig. 11(b) is an explanatory drawing showing a situation in which a coding mode $m(B^n)$ is assigned through hierarchical partitioning;

[Fig. 12] Fig. 12 is an explanatory drawing showing an example of an intra prediction parameter (intra prediction mode) which can be selected for each partition $P_i^n$ in a coding target block $B^n$;

[Fig. 13] Fig. 13 is an explanatory drawing showing an example of pixels which are used when generating a predicted value of each pixel in a partition $P_i^n$ in the case of $l_i^n = m_i^n = 4$;

[Fig. 14] Fig. 14 is an explanatory drawing showing examples of an already-encoded neighboring partition which is used for the calculation of predicted vector candidates for the motion vector of a partition $P_i^n$;

[Fig. 15] Fig. 15 is an explanatory drawing showing an example of partitions of a reference frame which is used for the calculation of predicted vector candidates for the motion vector of a partition $P_i^n$;

[Fig. 16] Fig. 16 is a block diagram showing a video encoding device in accordance with Embodiment 2 of the present invention; [Fig. 17] Fig. 17 is a block diagram showing a video decoding device in accordance with Embodiment 2 of the present invention; and

[Fig. 18] Fig. 18 is an explanatory drawing showing an example of partitioning a picture into small blocks each having a tile step size, and partitioning the picture into tiles at the position of one of the small blocks which are numbered one by one in a raster scan order.

## EMBODIMENTS OF THE INVENTION

Hereafter, the preferred embodiments of the present invention will be explained in detail with reference to the drawings.

Embodiment 1.

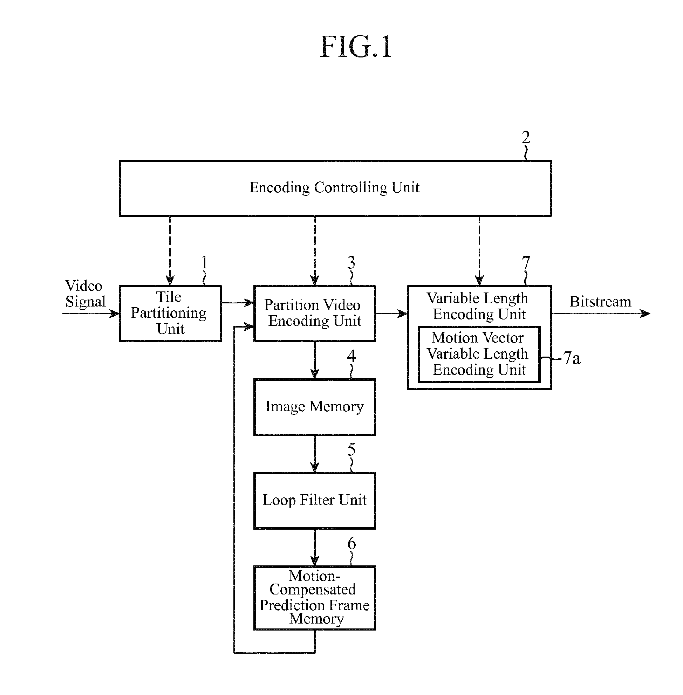

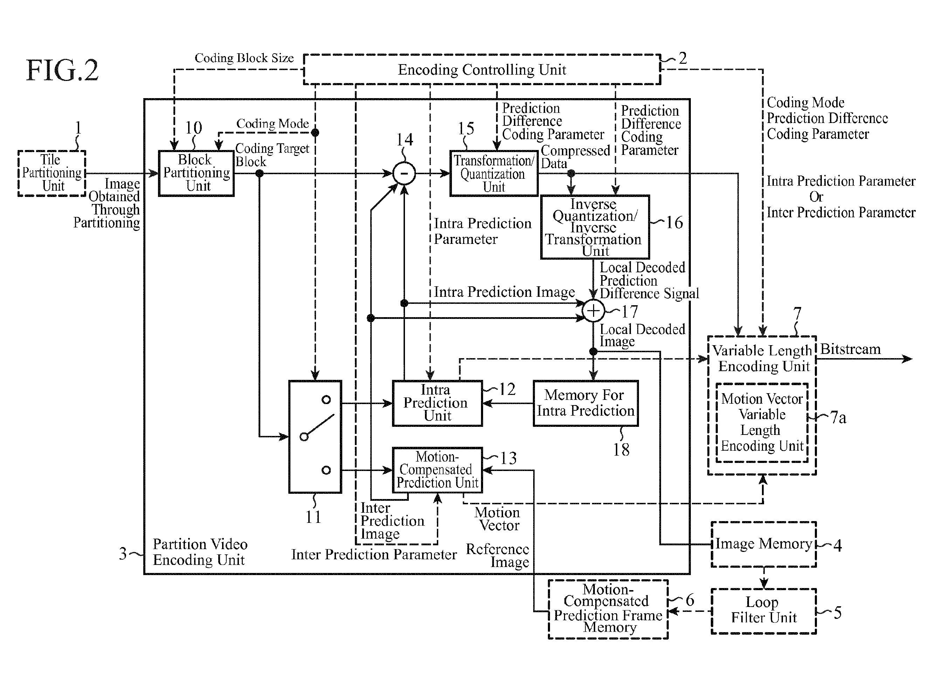

Fig. 1 is a block diagram showing a video encoding device in accordance with Embodiment 1 of the present invention, and Fig. 2 is a block diagram showing the inside of a partition video encoding unit 3 of the video encoding device in accordance with Embodiment 1 of the present invention. Referring to Figs. 1 and 2, a tile partitioning unit 1 carries out a process of, when receiving a video signal showing an inputted image (picture), partitioning the inputted image into tiles (rectangular regions) each having a tile size determined by an encoding controlling unit 2, and outputting one or more tiles to a partition video encoding unit 3. The tile partitioning unit 1 constructs a tile partitioner.

The encoding controlling unit 2 has a function of accepting a setting of the tile size, and carries out a process of calculating the position of each tile in the inputted image on the basis of the size of the tile for which the encoding controller accepts a setting. The encoding controlling unit 2 further carries out a process of determining both the size of each coding target block (coding block) which is a unit to be processed at a time when a prediction process is carried out, and an upper limit on the number of hierarchical layers at a time when each coding target block is partitioned hierarchically, and also determining a coding mode having the highest coding efficiency for a coding target block outputted from a block partitioning unit 10 of the partition video encoding unit 3 from among one or more selectable intra coding modes and one or more selectable inter coding modes. The encoding controlling unit 2 also carries out a process of, when the coding mode with the highest coding efficiency is an intra coding mode, determining an intra prediction parameter which the video encoding device uses when carrying out an intra prediction process on the coding target block in the intra coding mode, and, when the coding mode with the highest coding efficiency is an inter coding mode, determining an inter prediction parameter which the video encoding device uses when carrying out an inter prediction process on the coding target block in the inter coding mode. The encoding controlling unit 2 further carries out a process of determining a prediction difference coding parameter to be provided for a transformation/quantization unit 15 and an inverse quantization/inverse transformation unit 16 of the partition video encoding unit 3. The encoding controlling unit 2 constructs an encoding controller.

The partition video encoding unit 3 carries out a process of, every time when receiving a tile from the tile partitioning unit 1, partitioning this tile into blocks (coding target blocks) each having the size determined by the encoding controlling unit 2, and performing a prediction process on each of the coding target blocks to generate a prediction image in the coding mode determined by the encoding controlling unit 2. The partition video encoding unit 3 also carries out a process of performing an orthogonal transformation process and a quantization process on a difference image between each of the coding target blocks and the prediction image to generate compressed data and outputting the compressed data to a variable length encoding unit 7, and also performing an inverse quantization process and an inverse orthogonal transformation process on the compressed data to generate a local decoded image and storing the local decoded image in an image memory 4. When storing the local decoded image in the image memory 4, the partition video encoding unit stores the local decoded image at an address, in the image memory 4, corresponding to the position of the tile calculated by the encoding controlling unit 2.

The image memory 4 is a recording medium for storing the local decoded image generated by the partition video encoding unit 3. When the encoding on all the tiles in the picture is completed and the one picture of local decoded image is written in the image memory 4, a loop filter unit 5 carries out a process of performing a predetermined filtering process on the one picture of local decoded image, and outputting the local decoded image on which the loop filter unit performs the filtering process. A motion-compensated prediction frame memory 6 is a recording medium for storing the local decoded image on which the loop filter unit 5 performs the filtering process.

The variable length encoding unit 7 carries out a process of variable-length-encoding tile information outputted from the encoding controlling unit 2 and showing the rectangular region size of each tile and the position of each tile in the picture, coding parameters of each coding target block outputted from the encoding controlling unit 2 (a coding mode, an intra prediction parameter or an inter prediction parameter, and a prediction difference coding parameter), and encoded data about each coding target block outputted from the partition video encoding unit 3 (compressed data and motion information (when the coding mode is an inter coding mode)) to generate a bitstream into which the results of encoding those data are multiplexed. The variable length encoding unit 7 also carries out a process of variable-length-encoding a confirmation flag for partitioning showing whether the tile partitioning unit 1 partitions the picture into tiles to generate a bitstream into which the result of encoding the confirmation flag for partitioning is multiplexed. However, because it is not necessary to transmit the confirmation flag for partitioning to a video decoding device when the tile partitioning unit 1 partitions each picture into tiles at all times, the variable length encoding unit does not variable-length-encode the confirmation flag for partitioning. The variable length encoding unit 7 includes a motion vector variable length encoding unit 7a that variable-length-encodes a motion vector outputted from a motion-compensated prediction unit 13 of the partition video encoding unit 3 therein. The variable length encoding unit 7 constructs a variable length encoder.

The block partitioning unit 10 carries out a process of, every time when receiving a tile from the tile partitioning unit 1, partitioning this tile into coding target blocks each having the size determined by the encoding controlling unit 2, and outputting each of the coding target blocks. More specifically, the block partitioning unit 10 carries out a process of partitioning a tile outputted from the tile partitioning unit 1 into largest coding blocks each of which is a coding target block having the largest size determined by the encoding controlling unit 2, and also partitioning each of the largest coding blocks into blocks hierarchically until the number of hierarchical layers reaches the upper limit on the number of hierarchical layers which is determined by the encoding controlling unit 2. The block partitioning unit 10 constructs a block partitioner.

A select switch 11 carries out a process of, when the coding mode determined by the encoding controlling unit 2 is an intra coding mode, outputting the coding target block outputted from the block partitioning unit 10 to an intra prediction unit 12, and, when the coding mode determined by the encoding controlling unit 2 is an inter coding mode, outputting the coding target block outputted from the block partitioning unit 10 to a motion-compensated prediction unit 13.

The intra prediction unit 12 carries out a process of performing an intra prediction process on the coding target block outputted from the select switch 11 by using the intra prediction parameter determined by the encoding controlling unit 2 while referring to a local decoded image stored in a memory 18 for intra prediction to generate an intra prediction image (prediction image). The motion-compensated prediction unit 13 carries out a process of comparing the coding target block outputted from the select switch 11 with the local decoded image which is stored in the motion-compensated prediction frame memory 6 and on which a filtering process is carried out to search for a motion vector, and performing an inter prediction process (motion-compensated prediction process) on the coding target block by using both the motion vector and the inter prediction parameter determined by the encoding controlling unit 2 to generate an inter prediction image (prediction image). A prediction image generator is comprised of the intra prediction unit 12 and the motion-compensated prediction unit 13.

A subtracting unit 14 carries out a process of subtracting the intra prediction image generated by the intra prediction unit 12 or the inter prediction image generated by the motion-compensated prediction unit 13 from the coding target block outputted from the block partitioning unit 10, and outputting a prediction difference signal showing a difference image which is the result of the subtraction to the transformation/quantization unit 15. The transformation/quantization unit 15 carries out a process of performing an orthogonal transformation process (e.g., a DCT (discrete cosine transform) or an orthogonal transformation process, such as a KL transform, in which bases are designed for a specific learning sequence in advance) on the prediction difference signal outputted from the subtracting unit 14 by referring to the prediction difference coding parameter determined by the encoding controlling unit 2 to calculate transform coefficients, and also quantizing the transform coefficients by referring to the prediction difference coding parameter and then outputting compressed data which are the transform coefficients quantized thereby (quantization coefficients of the difference image) to the inverse quantization/inverse transformation unit 16 and the variable length encoding unit 7. An image compressor is comprised of the subtracting unit 14 and the transformation/quantization unit 15.

The inverse quantization/inverse transformation unit 16 carries out a process of inverse-quantizing the compressed data outputted from the transformation/quantization unit 15 by referring to the prediction difference coding parameter determined by the encoding controlling unit 2, and also performing an inverse orthogonal transformation process on the transform coefficients which are the compressed data inverse-quantized thereby by referring to the prediction difference coding parameter to calculate a local decoded prediction difference signal corresponding to the prediction difference signal outputted from the subtracting unit 14. An adding unit 17 carries out a process of adding the image shown by the local decoded prediction difference signal calculated by the inverse quantization/inverse transformation unit 16 and the intra prediction image generated by the intra prediction unit 12 or the inter prediction image generated by the motion-compensated prediction unit 13 to calculate a local decoded image corresponding to the coding target block outputted from the block partitioning unit 10. The memory 18 for intra prediction is a recording medium for storing the local decoded image calculated by the adding unit 17.

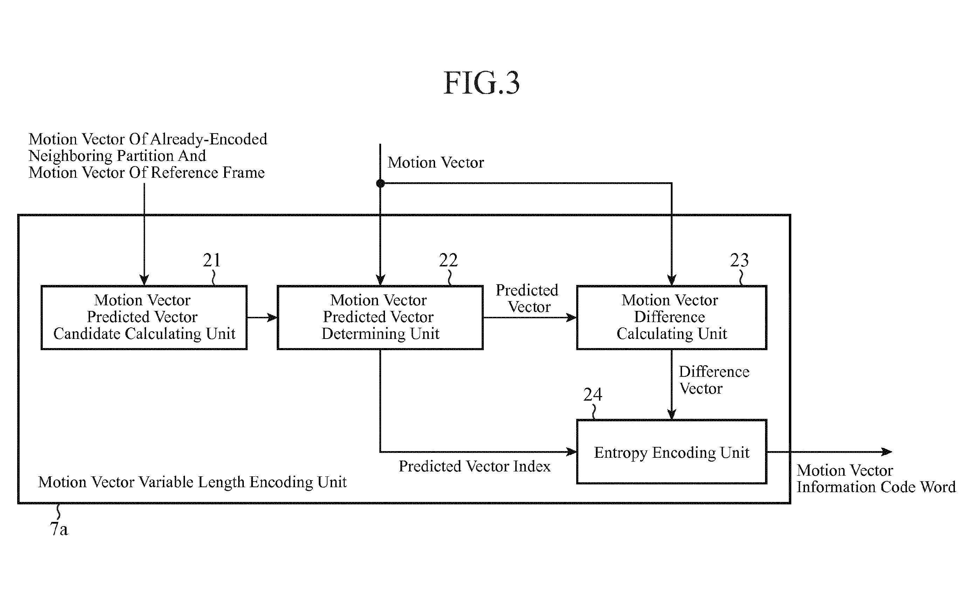

Fig. 3 is a block diagram showing the motion vector variable length encoding unit 7a which the variable length encoding unit 7 of the video encoding device in accordance with Embodiment 1 of the present invention includes therein. A motion vector predicted vector candidate calculating unit 21 of the motion vector variable length encoding unit 7a carries out a process of calculating predicted vector candidates for the motion vector of the coding target block from the motion vector of an already-encoded block adjacent to the coding target block outputted from the block partitioning unit 10, and the motion vector of a reference frame stored in the motion-compensated prediction frame memory 6.

A motion vector predicted vector determining unit 22 carries out a process of determining a predicted vector candidate which is the nearest to the motion vector of the coding target block as a predicted vector from among the one or more predicted vector candidates calculated by the motion vector predicted vector candidate calculating unit 21, and outputting the predicted vector to a motion vector difference calculating unit 23, and also outputting an index (predicted vector index) showing the predicted vector to an entropy encoding unit 24.

The motion vector difference calculating unit 23 carries out a process of calculating a difference vector between the predicted vector outputted from the motion vector predicted vector determining unit 22 and the motion vector of the coding target block. The entropy encoding unit 24 carries out a process of performing variable length encoding, such as arithmetic coding, on the difference vector calculated by the motion vector difference calculating unit 23 and the predicted vector index outputted from the motion vector predicted vector determining unit 22 to generate a motion vector information code word, and outputting the motion vector information code word.

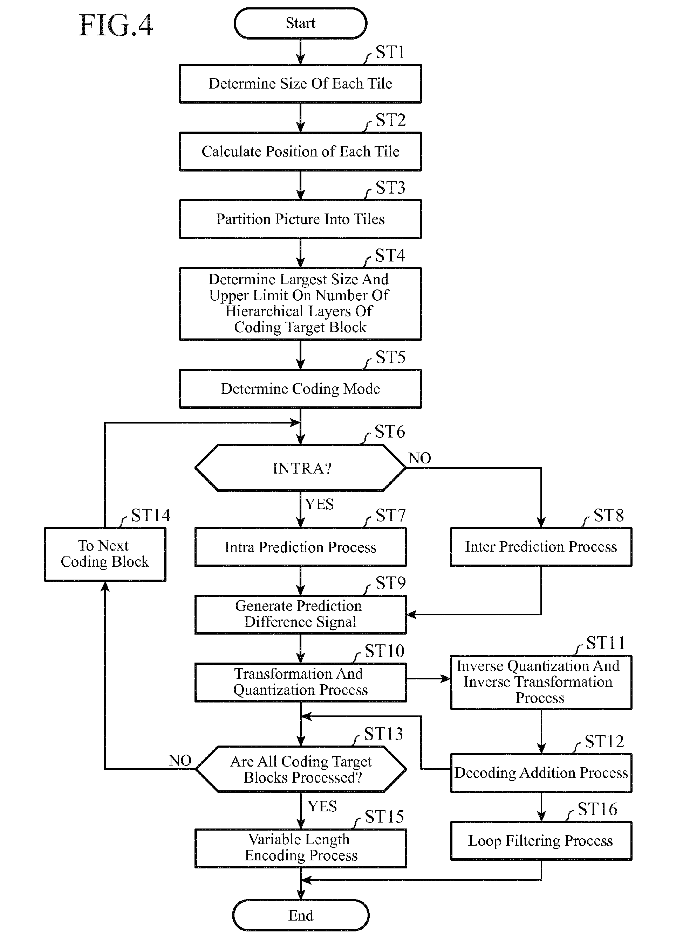

In the example shown in Fig. 1, it is assumed that each of the tile partitioning unit 1, the encoding controlling unit 2, the partition video encoding unit 3, the image memory 4, the loop filter unit 5, the motion-compensated prediction frame memory 6, and the variable length encoding unit 7, which are the components of the video encoding device, consists of dedicated hardware (e.g., a semiconductor integrated circuit equipped with a CPU, a one chip microcomputer, or the like). In a case in which the video encoding device consists of a computer, a program in which the processes carried out by the tile partitioning unit 1, the encoding controlling unit 2, the partition video encoding unit 3, the loop filter unit 5, and the variable length encoding unit 7 are described can be stored in a memory of the computer, and a CPU of the computer can be made to execute the program stored in the memory. Fig. 4 is a flow chart showing processing (a video encoding method) carried out by the video encoding device in accordance with Embodiment 1 of the present invention.

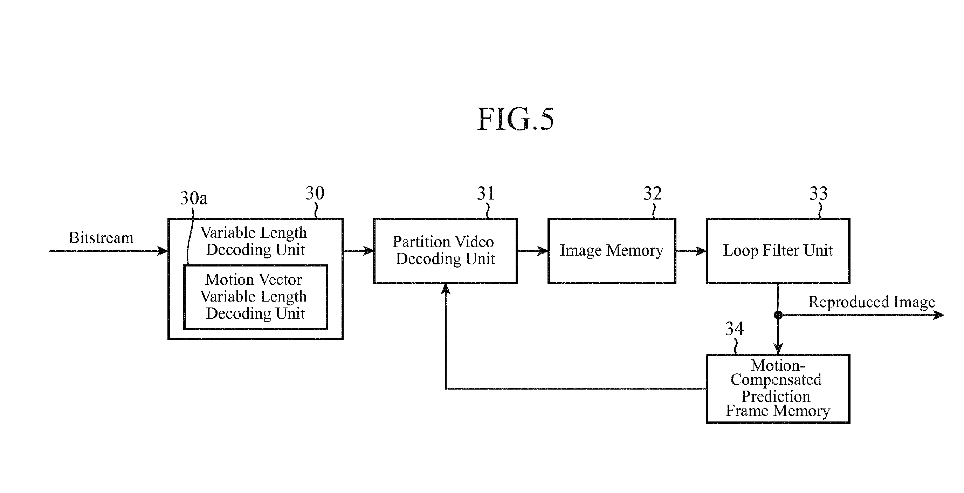

Fig. 5 is a block diagram showing the video decoding device in accordance with Embodiment 1 of the present invention. Referring to Fig. 5, when receiving the bitstream generated by the video encoding device shown in Fig. 1, a variable length decoding unit 30 carries out a process of variable-length-decoding a confirmation flag for partitioning showing, for each sequence which consists of one or more frames of pictures or for each picture, whether or not a picture is partitioned into one or more tiles. When the confirmation flag for partitioning shows that a picture is partitioned into one or more tiles, the variable length decoding unit 30 carries out a process of variable-length-decoding tile information from the bitstream, and also variable-length-decoding the coding parameters of each of coding target blocks into which each of the one or more tiles having the size shown by the tile information is partitioned hierarchically (a coding mode, an intra prediction parameter or an inter prediction parameter, and a prediction difference coding parameter), and encoded data (compressed data and motion information (when the coding mode is an inter coding mode)). Further, the variable length decoding unit 30 includes therein a motion vector variable length decoding unit 30a that carries out a process of variable-length-decoding a predicted vector index and a difference vector from a motion vector information code word included in the bitstream. The variable length decoding unit 30 constructs a variable length decoder.

A partition video decoding unit 31 carries out a process of performing a decoding process on a per tile basis to generate a decoded image on the basis of the compressed data, the coding mode, the intra prediction parameter or the inter prediction parameter and the motion vector, and the prediction difference coding parameter, which are variable-length-decoded on a per tile basis by the variable length decoding unit 30, and storing the decoded image in an image memory 32. When storing the decoded image in the image memory 32, the partition video decoding unit stores the decoded image at an address, in the image memory 32, corresponding to the position of the tile currently being processed, the position being indicated by the tile information. The image memory 32 is a recording medium for storing the decoded image generated by the partition video decoding unit 31. The image memory 32 constructs a decoded image storage.

A loop filter unit 33 carries out a process of, when the encoding on all the tiles in the picture is completed and the one picture of decoded image is written in the image memory 32, performing a predetermined filtering process on the one picture of decoded image, and outputting the decoded image on which the loop filter unit performs the filtering process. A motion-compensated prediction frame memory 34 is a recording medium for storing the decoded image on which the loop filter unit 33 performs the filtering process.

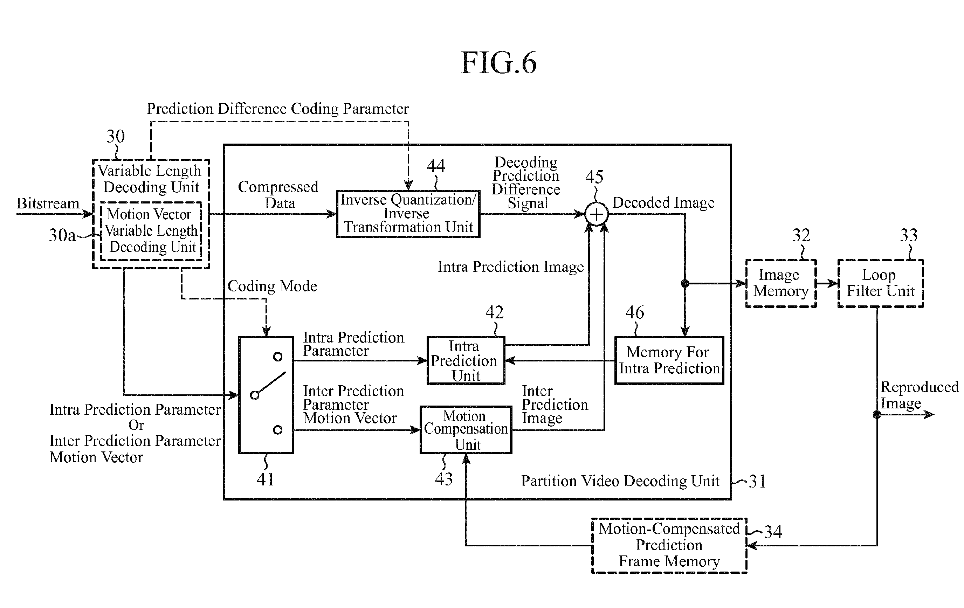

Fig. 6 is a block diagram showing the internal structure of the partition video decoding unit 31 of the video decoding device in accordance with Embodiment 1 of the present invention. Referring to Fig. 6, a select switch 41 carries out a process of, when the coding mode variable-length-decoded by the variable length decoding unit 30 is an intra coding mode, outputting the intra prediction parameter variable-length-decoded by the variable length decoding unit 30 to an intra prediction unit 42, and, when the coding mode variable-length-decoded by the variable length decoding unit 30 is an inter coding mode, outputting the inter prediction parameter and the motion vector which are variable-length-decoded by the variable length decoding unit 30 to a motion compensation unit 43.

The intra prediction unit 42 carries out a process of performing an intra prediction process on a decoding target block (block corresponding to a "coding target block" in the video encoding device shown in Fig. 1) by using the intra prediction parameter outputted from the select switch 41 while referring to a decoded image stored in a memory 46 for intra prediction to generate an intra prediction image (prediction image). The motion compensation unit 43 carries out a process of performing an inter prediction process (motion-compensated prediction process) on the decoding target block by using the motion vector and the inter prediction parameter which are outputted from the select switch 41 while referring to the decoded image which is stored in the motion-compensated prediction frame memory 34 and on which a filtering process is performed to generate an inter prediction image. A prediction image generator is comprised of the intra prediction unit 42 and the motion compensation unit 43.

An inverse quantization/inverse transformation unit 44 carries out a process of inverse-quantizing the compressed data variable-length-decoded by the variable length decoding unit 30 by referring to the prediction difference coding parameter variable-length-decoded by the variable length decoding unit 30, and also performing an inverse orthogonal transformation process on transform coefficients which are the compressed data inverse-quantized thereby by referring the prediction difference coding parameter to calculate a decoded prediction difference signal. An adding unit 45 carries out a process of adding an image shown by the decoded prediction difference signal calculated by the inverse quantization/inverse transformation unit 44 and the intra prediction image generated by the intra prediction unit 42 or the inter prediction image generated by the motion compensation unit 43 to calculate a decoded image of the decoding target block. A decoded image generator is comprised of the inverse quantization/inverse transformation unit 44 and the adding unit 45. The memory 46 for intra prediction is a recording medium for storing the decoded image calculated by the adding unit 45.

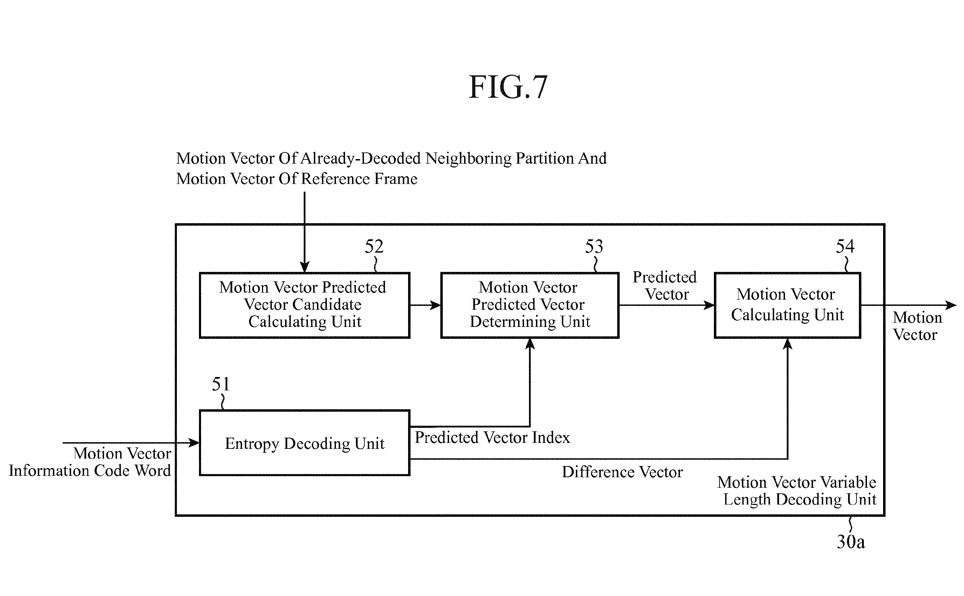

Fig. 7 is a block diagram showing the motion vector variable length decoding unit 30a which the variable length decoding unit 30 of the video decoding device in accordance with Embodiment 1 of the present invention includes therein. Referring to Fig. 7, an entropy decoding unit 51 of the motion vector variable length decoding unit 30a carries out a process of variable-length-decoding the predicted vector index and the difference vector from the motion vector information code word included in the bitstream. A motion vector predicted vector candidate calculating unit 52 carries out a process of calculating predicted vector candidates for the motion vector of the decoding target block from both the motion vector of an already-decoded block adjacent to the decoding target block and the motion vector of a reference frame stored in the motion-compensated prediction frame memory 34.

A motion vector predicted vector determining unit 53 carries out a process of selecting the predicted vector candidate shown by the predicted vector index variable-length-decoded by the entropy decoding unit 51 from the one or more predicted vector candidates calculated by the motion vector predicted vector candidate calculating unit 52, and outputting the predicted vector candidate as a predicted vector. A motion vector calculating unit 54 carries out a process of adding the predicted vector outputted from the motion vector predicted vector determining unit 53 and the difference vector variable-length-decoded by the entropy decoding unit 51 to calculate a motion vector of the decoding target block.

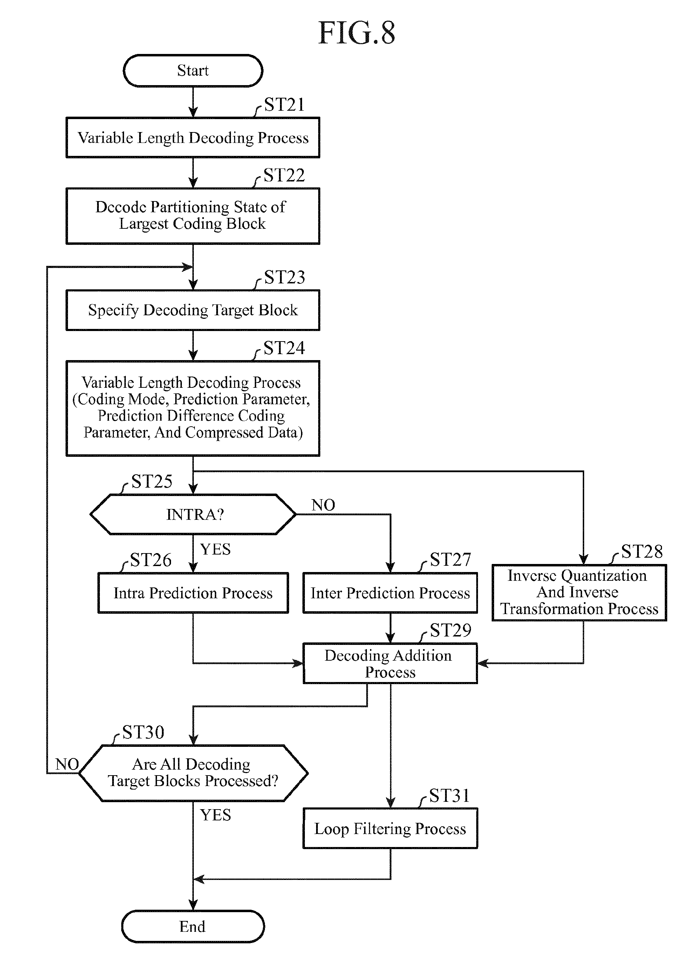

In the example shown in Fig. 5, it is assumed that each of the variable length decoding unit 30, the partition video decoding unit 31, the image memory 32, the loop filter unit 33, and the motion-compensated prediction frame memory 34, which are the components of the video decoding device, consists of dedicated hardware (e.g., a semiconductor integrated circuit equipped with a CPU, a one chip microcomputer, or the like). In a case in which the video encoding device consists of a computer, a program in which the processes carried out by the variable length decoding unit 30, the partition video decoding unit 31, and the loop filter unit 33 are described can be stored in a memory of the computer, and a CPU of the computer can be made to execute the program stored in the memory. Fig. 8 is a flow chart showing processing (video decoding method) carried out by the video decoding device in accordance with Embodiment 1 of the present invention.

Next, operations will be explained. In this Embodiment 1, an example in which the video encoding device receives each frame image (picture) of a video as an inputted image, partitions the picture into one or more tiles each of which is a rectangular region, carries out a motion-compensated prediction and so on between adjacent frames on a per tile basis, and performs a compression process with an orthogonal transformation and quantization on an acquired prediction difference signal, and, after that, carries out variable length encoding to generate a bitstream, and the video decoding device decodes the bitstream outputted from the video encoding device will be explained.

The video encoding device shown in Fig. 1 is characterized that the video encoding device partitions each frame image (picture) of a video into a plurality of rectangular regions (tiles), and carries out encoding on each of images obtained through the partitioning in parallel. Therefore, the partition video encoding unit 3 shown in Fig. 1 can be comprised of a plurality of partition video encoding units physically in such a way as to be able to encode the plurality of images obtained through the partitioning in parallel.

The partition video encoding unit 3 of the video encoding device shown in Fig. 1 is characterized in that the partition video encoding unit adapts itself to both a local change in a spacial direction of tiles and a local change in a temporal direction of tiles, the tiles being shown by the video signal, and partitions each tile into blocks which can have one of various sizes and carries out intra-frame and inter-frame adaptive encoding on each of the blocks. In general, the video signal has a characteristic of its complexity locally varying in space and time. There can be a case in which a pattern having a uniform signal characteristic in a relatively large image area, such as a sky image or a wall image, or a pattern having a complicated texture pattern in a small image area, such as a person image or a picture including a fine texture, also coexists on a certain video frame from the viewpoint of space. Also from the viewpoint of time, an image of a sky or a wall has a small change in a temporal direction in its pattern, while an image of a moving person or object has a larger temporal change because its outline has a movement of a rigid body and a movement of a non-rigid body with respect to time.

Although in the encoding process a process of generating a prediction difference difference signal having small signal power and small entropy by using a temporal and spatial prediction, thereby reducing the whole code amount, is carried out, the code amount of a parameter used for the prediction can be reduced as long as the parameter can be applied uniformly to as large an image signal region as possible. On the other hand, because the amount of errors occurring in the prediction increases when the same prediction parameter is applied to a large image area in an image signal pattern having a large change in time and space, the code amount of the prediction difference signal increases. Therefore, it is desirable to apply the same prediction parameter to an image area having a large change in time and space to reduce the block size of a block which is subjected to the prediction process, thereby increasing the data volume of the parameter which is used for the prediction and reducing the electric power and entropy of the prediction difference signal.

The video encoding device in accordance with this Embodiment 1 is constructed in such a way as to, in order to carry out encoding adapted for these typical characteristics of a video signal, hierarchically partition each tile which is an image obtained through the partitioning, and adapt a prediction process and an encoding process on a prediction difference for each region obtained through the partitioning. The video encoding device is further constructed in such a way as to, in consideration of the continuity within the picture of each region obtained through the partitioning, be able to refer to information to be referred to in a temporal direction (e.g., a motion vector) over a boundary between regions obtained through the partitioning and throughout the whole of a reference picture.

A video signal having a format which is to be processed by the video encoding device shown in Fig. 1 can be a YUV signal which consists of a luminance signal and two color difference signals or a color video signal in arbitrary color space, such as an RGB signal, outputted from a digital image sensor, or an arbitrary video signal, such as a monochrome image signal or an infrared image signal, in which each video frame consists of a series of digital samples (pixels) in two dimensions, horizontal and vertical. The gradation of each pixel can be a 8-bit, 10-bit, or 12-bit one.

In the following explanation, for convenience' sake, the video signal of the inputted image is a YUV signal unless otherwise specified. Further, a case in which signals having a 4:2:0 format which are subsampled are handled as the two color difference components U and V with respect to the luminance component Y will be described. Further, a data unit to be processed which corresponds to each frame of the video signal is referred to as a "picture." In this Embodiment 1, although an explanation will be made in which a "picture" is a video frame signal on which progressive scanning is carried out, a "picture" can be alternatively a field image signal which is a unit which constructs a video frame when the video signal is an interlaced signal.

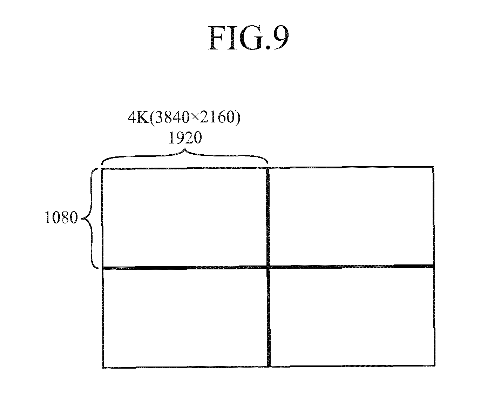

First, the processing carried out by the video encoding device shown in Fig. 1 will be explained. The encoding controlling unit 2 has a function of accepting a setting of the tile size, and determines the size of each tile at the time of partitioning a picture which is the target to be encoded into one or more tiles (step ST1 of Fig. 4). The video encoding device can determine the size of each tile by, for example, enabling a user to specify the size by using a user interface, such as a keyboard or a mouse, or by receiving size information transmitted from outside the video encoding device and setting the size of each tile according to the size information. Fig. 9 is an explanatory drawing showing an example of partitioning an image that is 3840 pixels wide by 2, 160 pixels high into four tiles. In the example of Fig. 9, the size of each tile is uniform and is 1920 pixels wide by 1080 pixels high. Although the example in which a picture is partitioned into equal tiles is shown in Fig. 9, a picture can be alternatively partitioned into tiles having different sizes. After determining the size of each tile, the encoding controlling unit 2 calculates the position of each tile within the picture which is the inputted image on the basis of the size of each tile (step ST2).

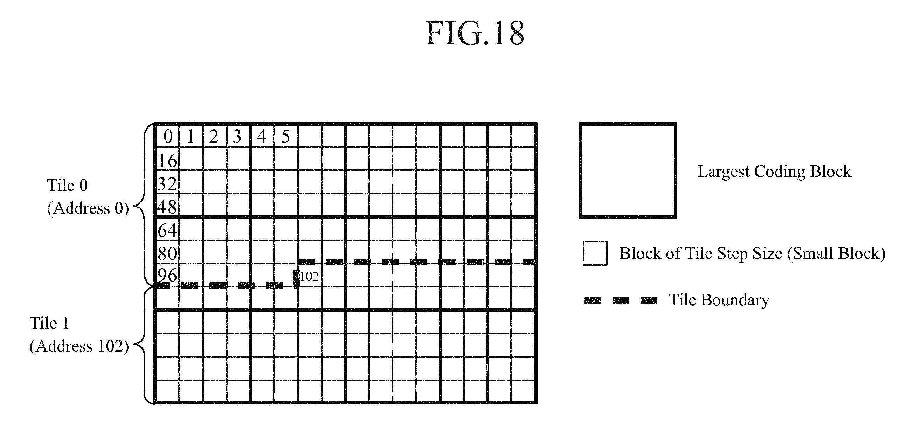

When receiving the video signal showing a picture, the tile partitioning unit 1 partitions the picture into tiles each of which has the size determined by the encoding controlling unit 2, and outputs each of the tiles to the partition video encoding unit 3 in order (step ST3). The encoding controlling unit 2 can set the size of each tile at the time of partitioning the picture into one or more tiles in steps of a pixel. The encoding controlling unit can alternatively set the size of each tile in steps of a minimum coding block size which is determined on the basis of the upper limit on the number of hierarchical layers with which to hierarchically partition each largest coding block, which will be mentioned below, into blocks. As an alternative, the encoding controlling unit can arbitrarily set the tile step size to the order of the power of 2. For example, in the case of 2 to the 0th power, the encoding controlling unit can the size of each tile in steps of one pixel, and, in the case of 2 to the 2th power, the encoding controlling unit can the size of each tile in steps of four pixels. In this case, the video encoding device can encode the exponent (i.e., the logarithm of the tile step size) as a parameter showing the tile step size, and encode the size of each tile on the basis of the tile step size. For example, in a case in which the tile step size is 8 pixels, the size of each tile can be set to an integral multiple of the tile step size, i.e., an integral multiple of 8, and values obtained by dividing the height and width of each tile by 8 are encoded as tile size information. As an alternative, the tile partitioning unit can partition the picture into small blocks each having the tile step size, and then partition the picture into tiles at the position of one of the small blocks which are numbered one by one in a raster scan order (Fig. 18). In this case, the shape of each tile does not necessarily need to be a rectangle. Further, the size (including a shape) and the position information of each tile are expressed by a number (address) added to the small block at the head of the tile, and what is necessary is just to, for each tile, encode the address of the small block at the head of the tile.

The encoding controlling unit 2 further determines the size of a largest coding block which is used for encoding of a tile which is the target to be encoded, and the upper limit on the number of hierarchical layers with which each largest coding block is hierarchically partitioned into blocks (step ST4). As a method of determining the size of a largest coding block, for example, there can be a method of determining an identical size for all the tiles in the picture, and a method of quantifying a difference in the complexity of a local movement in a tile of the video signal as a parameter, and determining a small size for a tile having a vigorous motion while determining a large size for a tile having few motions. As a method of determining the upper limit on the number of hierarchical layers for partitioning, there can be a method of adaptively determining the upper limit for each tile by, for example, increasing the number of hierarchical layers so that a finer motion can be detected when the video signal in the tile has a vigorous motion, and reducing the number of hierarchical layers when the video signal in the tile has few motions.

Every time when receiving a tile from the tile partitioning unit 1, the block partitioning unit 10 of the partition video encoding unit 3 partitions the tile into image regions each having the largest coding block size determined by the encoding controlling unit 2. After the block partitioning unit 10 partitions the tile into image regions each having the largest coding block size, for each of the image regions having the largest coding block size, the encoding controlling unit 2 determines a coding mode for each of coding target blocks, each having a coding block size, into which the above-mentioned image region is partitioned hierarchically until the number of hierarchical layers reaches the upper limit on the number of hierarchical layers for partitioning determined previously (step ST5).

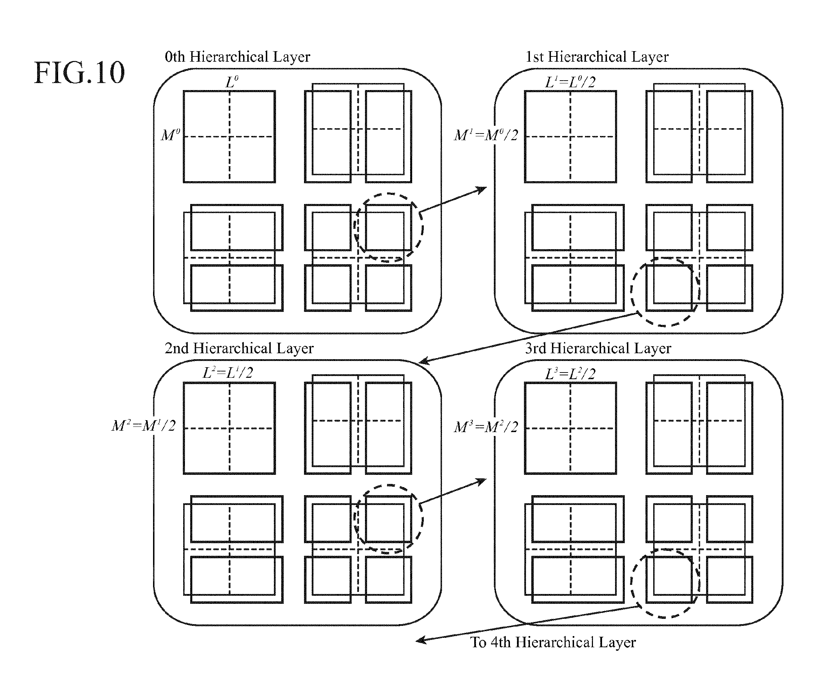

Fig. 10 is an explanatory drawing showing an example in which each largest coding block is hierarchically partitioned into a plurality of coding target blocks. Referring to Fig. 10, each largest coding block is a coding target block whose luminance component, which is shown by "0th hierarchical layer", has a size of $(L^0, M^0)$. By carrying out the hierarchical partitioning with this largest coding block being set as a starting point until the depth of the hierarchy reaches a predetermined depth which is set separately according to a quadtree structure, the coding target blocks can be acquired. At the depth of n, each coding target block is an image region having a size of $(L^n, M^n)$. In this example, although $L^n$ and $M^n$ can be the same as or differ from each other, the case of $L^n=M^n$ is shown in Fig. 10.

Hereafter, the coding block size determined by the encoding controlling unit 2 is defined as the size of $(L^n, M^n)$

in the luminance component of each coding target block. Because quadtree partitioning is carried out, $(L^n, M^n) = (L^n/2, M^n/2)$ is always established. In the case of a color video image signal (4:4:4 format), such as an RGB signal, in which all the color components have the same sample number, all the color components have a size of $(L^n, M^n)$, while in the case of handling a 4:2:0 format, a corresponding color difference component has a coding block size of $(L^n/2, M^n/2)$.

Hereafter, each coding target block in the nth hierarchical layer is expressed as $B^n$, and a coding mode selectable for each coding target block $B^n$ is expressed as $m(B^n)$. In the case of a color video signal which consists of a plurality of color components, the coding mode $m(B^n)$ can be formed in such a way that an individual mode is used for each color component, or can be formed in such a way that a common mode is used for all the color components. Hereafter, an explanation will be made by assuming that the coding mode indicates the one for the luminance component of a coding block having a 4:2:0 format in a YUV signal unless otherwise specified.

The coding mode $m(B^n)$ can be one of one or more intra coding modes (generically referred to as "INTRA") or one or more inter coding modes (generically referred to as "INTER"), and the encoding controlling unit 2 selects, as the coding mode $m(B^n)$, an coding mode with the highest coding efficiency for each coding target block $B^n$ from among all the coding modes available in the picture currently being processed or a subset of these coding modes.

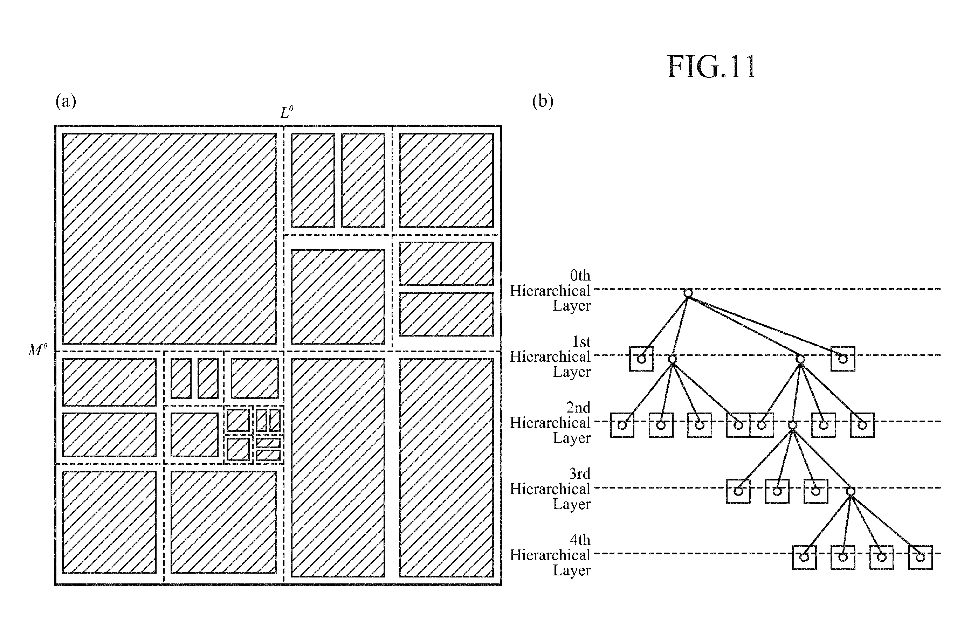

Each coding target block $B^n$ is further partitioned into one or more units for prediction process (partitions) by the block partitioning unit 10, as shown in Fig. 11. Hereafter, each partition belonging to a coding target block $B^n$ is expressed as $P_i^n$ (i shows a partition number in the nth hierarchical layer). How the partitioning of each coding target block $B^n$ into partitions is carried out is included as information in the coding mode $m(B^n)$. While a prediction process is carried out on each of all the partitions $P_i^n$ according to the coding mode $m(B^n)$, an individual prediction parameter can be selected for each partition $P_i^n$.

The encoding controlling unit 2 generates such a block partitioning state as shown in, for example, Fig. 11 for each largest coding block, and then determines coding target blocks. Hatched portions shown in Fig. 11(a) show a distribution of partitions obtained through the partitioning, and Fig. 11(b) shows a situation in which coding modes $m(B^n)$ are respectively assigned to the partitions according to the hierarchical layer partitioning by using a quadtree graph. Each node enclosed by □ shown in Fig. 11 (b) is a node (coding target block) to which a coding mode $m(B^n)$ is assigned.

When the coding mode $m(B^n)$ determined by the encoding controlling unit 2 is an intra coding mode (in the case of $m(B^n) \in$ INTRA), the select switch 11 outputs the coding target block $B^n$ outputted from the block partitioning unit 10 to the intra prediction unit 12. In contrast, when the coding mode $m(B^n)$ determined by the encoding controlling unit 2 is an inter coding mode (in the case of $m(B^n) \in$ INTER), the select switch outputs the coding target block $B^n$ outputted from the block partitioning unit 10 to the motion-compensated prediction unit 13.

When the coding mode $m(B^n)$ determined by the encoding controlling unit 2 is an intra coding mode (in the case of $m(B^n) \in$ INTRA), and the intra prediction unit 12 receives the coding target block $B^n$ from the select switch 11 (step ST6), the intra prediction unit 12 carries out an intra prediction process on each partition $P_i^n$ in the coding target block $B^n$ by using the intra prediction parameter determined by the encoding controlling unit 2 while referring to the local decoded image stored in the memory 18 for intra prediction to generate an intra prediction image $P_{INTRAi}^n$ (step ST7). Because the image decoding device needs to generate an intra prediction image which is completely the same as the intra prediction image $P_{INTRAi}^n$, the intra prediction parameter used for the generation of the intra prediction image $P_{INTRAi}^n$ is outputted from the encoding controlling unit 2 to the variable length encoding unit 7 and is multiplexed into the bitstream.

When the coding mode $m(B^n)$ determined by the encoding controlling unit 2 is an inter coding mode (in the case of $m(B^n) \in$ INTER), and the motion-compensated prediction unit 13 receives the coding target block $B^n$ from the select switch 11 (step ST6), the motion-compensated prediction unit 13 compares each partition $P_i^n$ in the coding target block $B^n$ with the local decoded image which is stored in the motion-compensated prediction frame memory 6 and on which a filtering process is carried out to search for a motion vector, and carries out an inter prediction process on each partition $P_i^n$ in the coding target block $B^n$ by using both the motion vector and the inter prediction parameter determined by the encoding controlling unit 2 to generate an inter prediction image $P_{INTERi}^n$ (step ST8). The local decoded image stored in the motion-compensated prediction frame memory 6 is one picture of local decoded image, and the motion-compensated prediction unit can generate an inter prediction image $P_{INTERi}^n$ in such a way that the inter prediction image extends over a tile boundary.

Further, because the video decoding device needs to generate an inter prediction image which is completely the same as the inter prediction image $P_{INTERi}^n$, the inter prediction parameter used for the generation of the inter prediction image $P_{INTERi}^n$ is outputted from the encoding controlling unit 2 to the variable length encoding unit 7 and is multiplexed into the bitstream. The motion vector which is searched for by the motion compensation prediction unit 13 is also outputted to the variable length encoding unit 7 and is multiplexed into the bitstream.

When receiving the coding target block $B^n$ from the block partitioning unit 10, the subtracting unit 14 subtracts the intra prediction image $P_{INTRAi}^n$ generated by the intra prediction unit 12 or the inter prediction image $P_{INTERi}^n$ generated by the motion-compensated prediction unit 13 from each partition $P_i^n$ in the coding target block $B^n$, and outputs a prediction difference signal $e_i^n$ showing a difference image which is the result of the subtraction to the transformation/quantization unit 15 (step ST9).

When receiving the prediction difference signal $e_i^n$ from the subtracting unit 14, the transformation/quantization unit 15 carries out an orthogonal transformation process (e.g., a DCT (discrete cosine transform) or an orthogonal transformation process, such as a KL transform, in which bases are designed for a specific learning sequence in advance) on the prediction difference signal $e_i^n$ by referring to the prediction difference coding parameter determined by the encoding controlling unit 2 to calculate transform coefficients (step ST10). The transformation/quantization unit 15 also quantizes the transform coefficients by referring to the prediction difference coding parameter and then outputs compressed data which are the transform coefficients quantized thereby to the inverse quantization/inverse transformation unit 16 and the variable length encoding unit 7 (step ST10).

When receiving the compressed data from the transformation/quantization unit 15, the inverse quantization/inverse transformation unit 16 inverse-quantizes the compressed data by referring to the prediction difference coding parameter determined by the encoding controlling unit 2 (step ST11). The inverse quantization/inverse transformation unit 16 also carries out an inverse orthogonal transformation process (e.g., an inverse DCT or an inverse KL transform) on the transform coefficients which are the compressed data inverse-quantized thereby by referring to the prediction difference coding parameter to calculate a local decoded prediction difference signal corresponding to the prediction difference signal $e_i^n$ outputted from the subtracting unit 14 (step ST11).

When receiving the local decoded prediction difference signal from the inverse quantization/inverse transformation unit 16, the adding unit 17 adds an image shown by the local decoded prediction difference signal and the intra prediction image $P_{INTRAi}^n$ generated by the intra prediction unit 12 or the inter prediction image $P_{INTERi}^n$ generated by the motion-compensated prediction unit 13 to calculate a local decoded image corresponding to the coding target block $B^n$ outputted from the block partitioning unit 10 as a local decoded partition image or a group of local decoded partition images (step ST12). The adding unit 17 stores the local decoded image in the image memory 4, and also stores the local decoded image in the memory 18 for intra prediction. This local decoded image is an image signal for subsequent intra prediction.

The loop filter unit 5 carries out a predetermined filtering process on the local decoded image stored in the image memory 4, and stores the local decoded image on which the loop filter unit carries out the filtering process in the motion-compensated prediction frame memory 6 (step ST16). The filtering process by the loop filter unit 5 can be carried out on each largest coding block of the local decoded image inputted thereto or each coding target block of the local decoded image inputted thereto. As an alternative, after one picture of local decoded image is inputted, the loop filter unit can carry out the filtering process on the one picture of local decoded image at a time. Further, as an example of the predetermined filtering process, there can be provided a process of filtering a block boundary in such a way as to make discontinuity (block noise) at the block boundary unobtrusive, and a filtering process of compensating for a distortion occurring in the local decoded image in such a way that an error between the picture shown by the video signal inputted and the local decoded image is minimized. However, because the loop filter unit 5 needs to refer to the video signal showing the picture when carrying out the filtering process of compensating for a distortion occurring in the local decoded image in such a way that an error between the picture and the local decoded image is minimized, there is a necessity to modify the video encoding device shown in Fig. 1 in such a way that the video signal is inputted to the loop filter unit 5.

The video encoding device repeatedly carries out the processes of steps ST6 to ST12 until the video encoding device completes the processing on all the coding blocks $B^n$ into which the inputted image is partitioned hierarchically, and, when completing the processing on all the coding blocks $B^n$, shifts to a process of step ST15 (steps ST13 and ST14).

The variable length encoding unit 7 carries out a process of variable-length-encoding the tile information outputted from the encoding controlling unit 2 and showing the rectangular region size of each tile and the position of each tile in the picture (the tile information includes an initialization instruction flag for arithmetic coding process, and a flag showing whether or not to allow a reference to a decoded pixel over a tile boundary and a reference to various coding parameters over a tile boundary, in addition to the information showing the size and the position of each tile), the coding parameters of each coding target block outputted from the encoding controlling unit 2 (the coding mode, the intra prediction parameter or the inter prediction parameter, and the prediction difference coding parameter), and the encoded data about each coding target block outputted from the partition video encoding unit 3 (the compressed data and the motion information (when the coding mode is an inter coding mode)) to generate a bitstream into which the results of the encoding are multiplexed. The variable length encoding unit 7 also variable-length-encodes the confirmation flag for partitioning showing whether the tile partitioning unit 1 partitions the picture into tiles to generate a bitstream into which the result of encoding the confirmation flag for partitioning is multiplexed. However, when the tile partitioning unit 1 does not partition a picture into tiles at all times, the video encoding device does not carry out variable length encoding on the confirmation flag for partitioning because the video encoding device does not need to transmit the confirmation flag for partitioning to the video decoding device.

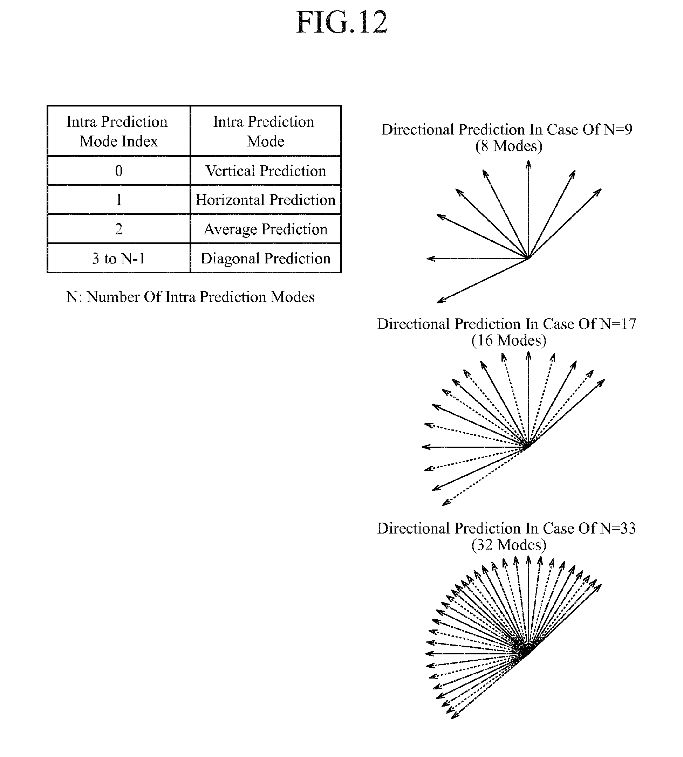

Next, the process carried out by the intra prediction unit 12 will be explained in detail. Fig. 12 is an explanatory drawing showing an example of the intra prediction parameter (intra prediction mode) which can be selected for each partition $P_i^n$ in the coding target block $B^n$. In Fig. 12, intra prediction modes and prediction direction vectors represented by each of the intra prediction modes are shown.

The intra prediction unit 12 carries out an intra prediction process on a partition $P_i^n$ by referring to the intra prediction parameter of the partition $P_i^n$ to generate an intra prediction image $P_{INTRAi}^n$. Hereafter, an intra prediction process of generating an intra prediction signal of the luminance signal on the basis of the intra prediction parameter (intra prediction mode) for the luminance signal of the partition $P_i^n$ will be explained.

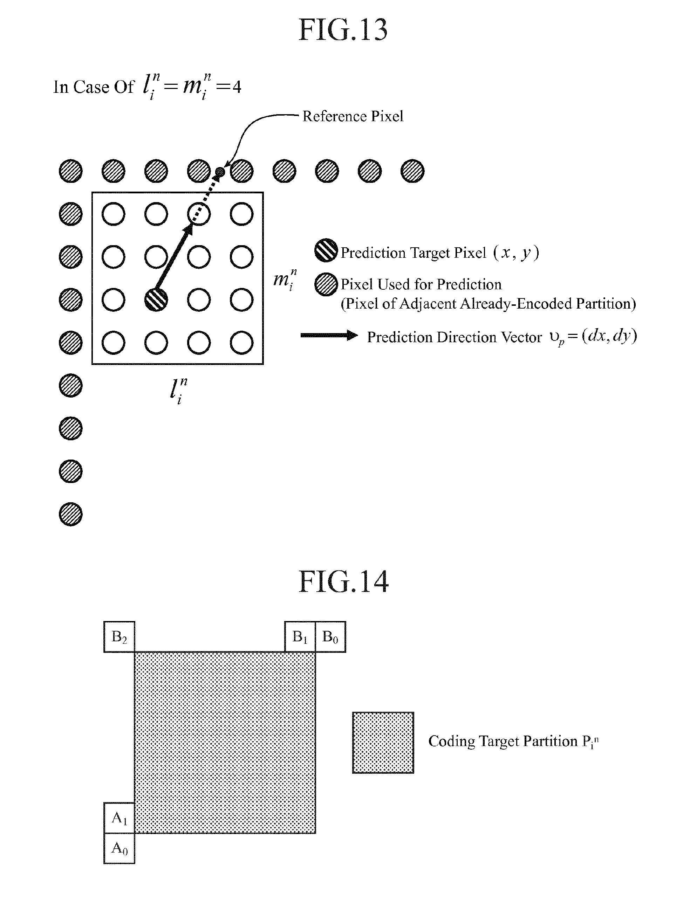

Hereafter, the partition $P_i^n$ is assumed to have a size of $l_i^n \times m_i^n$ pixels. Fig. 13 is an explanatory drawing showing an example of pixels which are used when generating a predicted value of each pixel in the partition $P_i^n$ in the case of $l_i^n = m_i^n = 4$. Although the $(2 \times l_i^n + 1)$ pixels in an already-encoded upper partition which is adjacent to the partition $P_i^n$ and the $(2 \times m_i^n)$ pixels in an already-encoded left partition which is adjacent to the partition $P_i^n$ are defined as the pixels used for prediction in the example of Fig. 13, a smaller number of pixels than the pixels shown in Fig. 13 can be used for prediction. The local decoded image of a tile which is the target to be encoded is stored in the memory 18 for intra prediction, and, when the pixels in the upper partition or the left partition are not included in the tile which is the target to be encoded (the current image obtained through the partitioning), the pixel values used for prediction are replaced by already-encoded pixel values in the tile or constant values according to a predetermined rule. Further, although one adjacent row or column of pixels are used for prediction in the example of Fig. 13, two rows or columns of pixels or three or more rows or columns of pixels can be used for prediction.

When an index value indicating the intra prediction mode for the partition $P_i^n$ is 2 (average prediction), the intra prediction unit generates a prediction image by using the average of the adjacent pixels in the upper partition and the adjacent pixels in the left partition as the predicted value of each pixel in the partition $P_i^n$. When the index value indicating the intra prediction mode is other than 2 (average prediction), the intra prediction unit generates the predicted value of each pixel in the partition $P_i^n$ on the basis of a prediction direction vector up= (dx, dy) shown by the index value. When relative coordinates in the partition $P_i^n$ (the upper left pixel of the partition is defined as the point of origin) of each pixel (prediction target pixel) for which the predicted value is generated are expressed as (x, y), the position of a reference pixel which is used for prediction is the point of intersection where the following L and a line of adjacent pixels intersect each other.

$$\mathbf{L} = \begin{pmatrix} x \\ y \end{pmatrix} + k v_p \qquad (1)$$

where k is a scalar value.

When the reference pixel is at an integer pixel position, the value of the corresponding integer pixel is determined as the predicted value of the prediction target pixel, whereas when the reference pixel is not at an integer pixel position, the value of an interpolation pixel generated from the integer pixels which are adjacent to the reference pixel is determined as the predicted value of the prediction target pixel. In the example of Fig. 13, because the reference pixel is not at an integer pixel position, the average of the values of the two pixels which are adjacent to the reference pixel is determined as the predicted value. The intra prediction unit can use not only the adjacent two pixels but also two or more adjacent pixels to generate an interpolation pixel and determine the value of this interpolation pixel as the predicted value. Even when the reference pixel is at an integer pixel position, the intra prediction unit can generate an interpolation pixel from the integer pixel and an adjacent pixel and determine the value of the interpolation pixel as the predicted value. According to the same procedure, the intra prediction unit generates prediction pixels for all the pixels of the luminance signal in the partition $P_i^n$, and outputs an intra prediction image $P_{INTRAi}^n$. The intra prediction parameter used for the generation of the intra prediction image $P_{INTRAi}^n$ is outputted to the variable length encoding unit 7 in order to multiplex the intra prediction parameter into the bitstream.

The intra prediction unit also carries out an intra process based on the intra prediction parameter (intra prediction mode) on each of the color difference signals of the partition $P_i^n$ according to the same procedure as that according to which the intra prediction unit carries out an intra process on the luminance signal, and outputs the intra prediction parameter used for the generation of the intra prediction image to the variable length encoding unit 7.

Next, the process carried out by the variable length encoding unit 7 will be explained in detail. When variable-length-encoding the motion vector, the variable length encoding unit 7 calculates a predicted vector for the motion vector of the partition $P_i^n$ which is the target to be encoded on the basis of the motion vector of an already-encoded neighboring partition or the motion vector of a reference frame, and carries out predictive coding by using the predicted vector. More specifically, the motion vector predicted vector candidate calculating unit 21 of the motion vector variable length encoding unit 7a which constructs a part of the variable length encoding unit 7 calculates predicted vector candidates for the partition $P_i^n$ which is the target to be encoded from the motion vector of an already-encoded partition adjacent to the partition $P_i^n$ which is the target to be encoded, and the motion vector of a reference frame stored in the motion-compensated prediction frame memory 6.

Fig. 14 is an explanatory drawing showing examples of the already-encoded neighboring partition which is used for the calculation of predicted vector candidates for the motion vector of the partition $P_i^n$. In the example of Fig. 14, the motion vector of an already-encoded lower left partition ($A_0$) located opposite to the lower left corner of the partition $P_i^n$ is determined as a predicted vector candidate A. However, when the motion vector of the lower left partition ($A_0$) cannot be used, such as when the lower left partition ($A_0$) is not included in the target tile to be encoded or when the lower left partition is a partition already encoded in an intra coding mode, the motion vector of an already-encoded partition $A_1$ adjacent to the lower left partition ($A_0$) is determined as the predicted vector candidate A.

Further, when the motion vector of an already-encoded upper right partition ($B_0$) located opposite to the upper right corner of the partition $P_i^n$ is determined as a predicted vector candidate B. However, when the motion vector of the upper right partition ($B_0$) cannot be used, such as when the upper right partition ($B_0$) is not included in the target tile to be encoded or when the upper right partition is a partition already encoded in an intra coding mode, the motion vector of an already-encoded partition B1 adjacent to the upper right partition ($B_0$) or the motion vector of an already-encoded upper left partition ($B_2$) located opposite to the upper left corner of the partition $P_i^n$ is determined as the predicted vector candidate B.

Next, a method of calculating predicted vector candidates C from the motion vector of a reference frame will be explained. The reference frame used for calculating predicted vector candidates is determined from among the reference frames stored in the motion-compensated prediction frame memory 6. In the method of determining the reference frame, for example, the frame which is the nearest to the frame including the target tile to be encoded in the order of displaying frames is selected. Next, a partition which is used for calculating predicted vector candidates in the reference frame is determined.

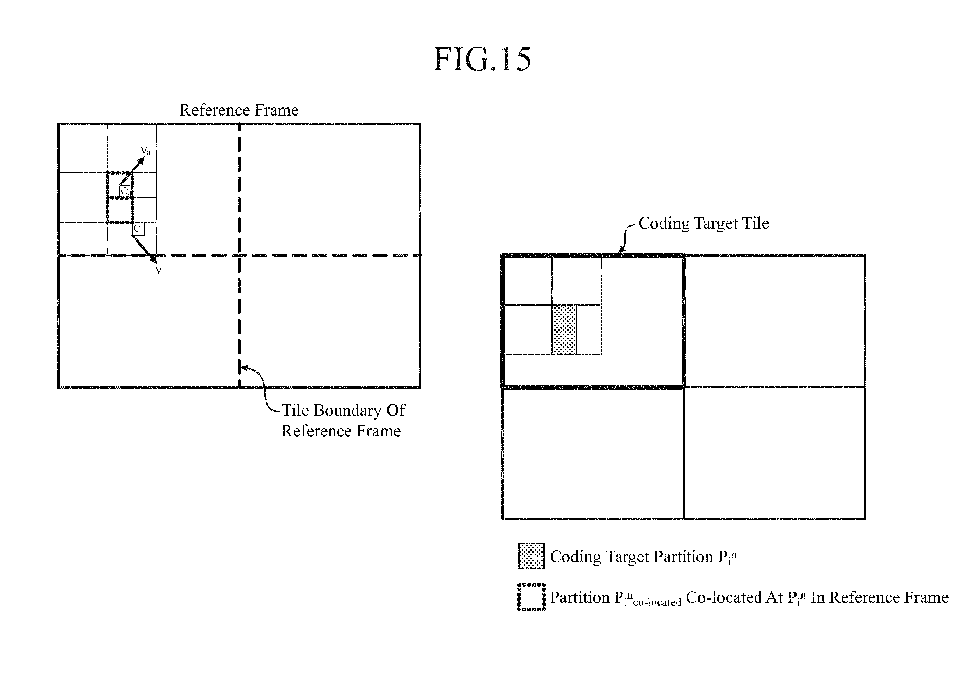

Fig. 15 is an explanatory drawing showing an example of the partition in the reference frame which is used for the calculation of predicted vector candidates for the motion vector of the partition $P_i^n$. In the example of Fig. 15, the motion vector ($v_0$) of the partition including the pixel ($C_0$) at the center position of the partition $P_i^n{}_{co\text{-}located}$ co-located at the partition $P_i^n$, and the motion vector ($V_1$) of the partition including the pixel ($C_1$) located opposite to the lower right corner of the partition $P_i^n{}_{co\text{-}located}$ are determined as predicted vector candidates C. As an alternative, the motion vector of a partition including a pixel within the partition $P_i^n{}_{co\text{-}located}$, instead of the pixel ($C_0$), and the motion vector of a partition including a pixel adjacent to the partition $P_i^n{}_{co\text{-}located}$, instead of the pixel ($C_1$), can be determined as motion vector candidates C. Further, when the motion vector of a partition including a pixel at a predetermined position cannot be used, such as when the partition including the pixel at the predetermined position is already encoded in an intra coding mode, motion vector candidates C can be determined from a partition including a pixel at another position.

A motion vector candidate C in a temporal direction can be referred to over a tile boundary in the reference frame. As an alternative, any reference to a motion vector candidate C in a temporal direction over a tile boundary in the reference frame can be prohibited. As an alternative, whether to enable or disable a reference over a tile boundary in the reference frame can be changed according to a flag on a per sequence, frame, or tile basis, and the flag can be multiplexed into the bitstream as a parameter per sequence, frame, or tile.

After calculating one or more predicted vector candidates, the motion vector predicted vector candidate calculating unit 21 outputs the one or more predicted vector candidates to the motion vector predicted vector determining unit 22. When no predicted vector candidates A, no predicted vector candidates B, and no predicted vector candidates C exist, i.e., when no motion vector can be used, such as when any partition which is the target for which predicted vector candidates are calculated is already encoded in an intra coding mode, a fixed vector (e. g. , a zero vector (a vector that refers to a position just behind) ) is outputted as a predicted vector candidate.

When receiving the one or more predicted vector candidates from the motion vector predicted vector candidate calculating unit 21, the motion vector predicted vector determining unit 22 selects, as a predicted vector, a predicted vector candidate which minimizes the magnitude or the code amount of a difference vector between the predicted vector candidate and the motion vector of the partition $P_i^n$ which is the target to be encoded from the one or more predicted vector candidates. The motion vector predicted vector determining unit 22 outputs the predicted vector selected thereby to the motion vector difference calculating unit 23, and outputs an index (predicted vector index) showing the predicted vector to the entropy encoding unit 24.

When receiving the predicted vector from the motion vector predicted vector determining unit 22, the motion vector difference calculating unit 23 calculates the difference vector between the predicted vector and the motion vector of the partition $P_i^n$, and outputs the difference vector to the entropy encoding unit 24. When receiving the difference vector from the motion vector difference calculating unit 23, the entropy encoding unit 24 carries out variable length encoding, such as arithmetic coding, on the difference vector and the predicted vector index outputted from the motion vector predicted vector determining unit 22 to generate a motion vector information code word, and outputs the motion vector information code word.

Next, processing carried out by the video decoding device shown in Fig. 5 will be explained concretely. When receiving the bitstream generated by the video encoding device shown in Fig. 1, the variable length decoding unit 30 carries out a variable length decoding process on the bitstream to decode the frame size of each picture for each sequence which consists of one or more frames of pictures. Further, the variable length decoding unit 30 decodes the confirmation flag for partitioning showing whether or not each picture is partitioned into tiles from the bitstream.

When the confirmation flag for partitioning shows that a picture is partitioned into one or more tiles, the variable length decoding unit 30 variable-length-decodes the tile information from the bitstream. The tile information includes the initialization instruction flag for arithmetic coding process, and the flag showing whether or not to allow a reference to a decoded pixel over a tile boundary and a reference to various coding parameters over a tile boundary, in addition to the information showing the size and the position of each tile.

After variable-length-decoding the tile information from the bitstream, the variable length decoding unit 30 variable-length-decodes the coding parameters of each of coding target blocks into which each tile having the size shown by the tile information is hierarchically partitioned (the coding mode, the intra prediction parameter or the inter prediction parameter, and the prediction difference coding parameter), and the encoded data (the compressed data and the motion information (when the coding mode is an inter coding mode)) (step ST21 of Fig. 8). More specifically, the variable length decoding unit 30 specifies the one or more tiles by referring to the size shown by the tile information, and decodes the partitioning state of each largest coding block by referring to the coding mode of the largest coding block for each of the one or more tiles (step ST22). Although the example of decoding the partitioning state of each largest coding block by referring to the coding mode of the largest coding block is shown in this embodiment, the largest coding block size and the upper limit on the number of hierarchical layers for partitioning which are determined by the encoding controlling unit 2 of the video encoding device shown in Fig. 1 can be determined according to the same procedure as that according to which the video encoding device does. For example, when the largest coding block size and the upper limit on the number of hierarchical layers for partitioning are determined according to the resolution of the video signal, the largest coding block size and the upper limit on the number of hierarchical layers for partitioning are determined on the basis of the decoded frame size information according to the same procedure as that according to which the video encoding device does.

After decoding the partitioning state of each largest coding block, the variable length decoding unit 30 specifies the decoding target blocks into which the largest coding block is partitioned hierarchically (blocks respectively corresponding to "coding target blocks" in the video encoding device shown in Fig. 1) on the basis of the partitioning state of the largest coding block (step ST23).

After specifying the decoding target blocks (coding target blocks) into which the largest coding block is partitioned hierarchically, the variable length decoding unit 30 decodes the coding mode assigned to each of the decoding target blocks, partitions the decoding target block into one or more units for prediction process on the basis of the information included in the coding mode, and decodes the prediction parameter assigned to each of the one or more units for prediction process (step ST24). When the coding mode assigned to a decoding target block is an intra coding mode, the variable length decoding unit 30 decodes the intra prediction parameter for each of one or more partitions included in the decoding target block.

When the coding mode assigned to the coding mode is an inter coding mode, the variable length decoding unit 30 decodes the motion vector and the inter prediction parameter for each of the one or more partitions included in the decoding target block. The decoding of the motion vector is carried out by calculating a predicted vector for the motion vector of the target partition to be decoded $P_i^n$ on the basis of the motion vector of an already-decoded neighboring partition or the motion vector of a reference frame and by using the predicted vector according to the same procedure as that according to which the video encoding device shown in Fig. 1 does. More specifically, the entropy decoding unit 51 of the motion vector variable length decoding unit 30a which the variable length decoding unit 30 has therein variable-length-decodes the predicted vector index and the difference vector from the motion vector information code word included in the bitstream. The motion vector predicted vector candidate calculating unit 52 calculates one or more predicted vector candidates according to the same procedure as that according to which the motion vector predicted vector candidate calculating unit 21 shown in Fig. 3 does.

The motion vector predicted vector determining unit 53 selects, as a predicted vector, a predicted vector candidate shown by the predicted vector index variable-length-decoded by the entropy decoding unit 51 from the one or more predicted vector candidates calculated by the motion vector predicted vector candidate calculating unit 52, and outputs the predicted vector to the motion vector calculating unit 54. When receiving the predicted vector from the motion vector predicted vector determining unit 53, the motion vector calculating unit 54 decodes the motion vector (predicted vector + difference vector) by adding the predicted vector and the difference vector variable-length-decoded by the entropy decoding unit 51.

The variable length decoding unit 30 further divides each of the one or more partitions which is a unit for prediction process into one or more partitions each of which is a unit for transformation process on the basis of transform block size information included in the prediction difference coding parameter, and decodes the compressed data (the transform coefficients transformed and quantized) for each partition which is a unit for transformation process.

When the confirmation flag for partitioning shows that the picture is not partitioned into one or more tiles, the variable length decoding unit 30 variable-length-decodes the coding parameters of each of coding target blocks into which the picture which is the inputted image inputted to the video encoding device shown in Fig. 1 is hierarchically partitioned (the coding mode, the intra prediction parameter or the inter prediction parameter, and the prediction difference coding parameter) and the encoded data (the compressed data and the motion information (when the coding mode is an inter coding mode)).

When the coding mode $m(B^n)$ variable-length-decoded by the variable length decoding unit 30 is an intra coding mode (in the case of $m(B^n) \in$ INTRA), the select switch 41 of the partition video decoding unit 31 outputs the intra prediction parameter variable-length-decoded by the variable length decoding unit 30 to the intra prediction unit 42. In contrast, when the coding mode $m(B^n)$ variable-length-decoded by the variable length decoding unit 30 is an inter coding mode (in the case of $m(B^n) \in$ INTER), the select switch outputs the inter prediction parameter and the motion vector which are variable-length-decoded by the variable length decoding unit 30 to the motion compensation unit 43.

When the coding mode $m(B^n)$ variable-length-decoded by the variable length decoding unit 30 is an intra coding mode (in the case of $m(B^n) \in$ INTRA) and the intra prediction unit 42 receives the intra prediction parameter from the select switch 41 (step ST25), the intra prediction unit 42 carries out an intra prediction process on each partition $P_i^n$ in the decoding target block $B^n$ by using the intra prediction parameter while referring to the decoded image stored in the memory 46 for intra prediction to generate an intra prediction image $P_{INTRAi}^n$ according to the same procedure as that according to which the intra prediction unit 12 shown in Fig. 2 does (step ST26).

When the coding mode $m(B^n)$ variable-length-decoded by the variable length decoding unit 30 is an inter coding mode (in the case of $m(B^n) \in$ INTER) and the motion compensation unit 43 receives the inter prediction parameter and the motion vector from the select switch 41 (step ST25), the motion compensation unit 43 carries out an inter prediction process on the decoding target block by using the motion vector and the inter prediction parameter while referring to the decoded image which is stored in the motion-compensated prediction frame memory 34 and on which a filtering process is carried out to generate an inter prediction image $P_{INTERi}^n$ (step ST27).

When receiving the compressed data and the prediction difference coding parameter from the variable length decoding unit 30 (step ST25), the inverse quantization/inverse transformation unit 44 inverse-quantizes the compressed data by referring to the prediction difference coding parameter and also carries out an inverse orthogonal transformation process on transform coefficients which are the compressed data inverse-quantized thereby by referring to the prediction difference coding parameter to calculate a decoded prediction difference signal according to the same procedure as that according to which the inverse quantization/inverse transformation unit 16 shown in Fig. 2 does (step ST28).

The adding unit 45 adds an image shown by the decoded prediction difference signal calculated by the inverse quantization/inverse transformation unit 44 and the intra prediction image $P_{INTRAi}^n$ generated by the intra prediction unit 42 or the inter prediction image $P_{INTERi}^n$ generated by the motion compensation unit 43 and stores a decoded image in the image memory 32 as a group of one or more decoded partition image included in the decoding target block, and also stores the decoded image in the memory 46 for intra prediction (step ST29). This decoded image is an image signal for subsequent intra prediction. When storing the decoded image in the image memory 32, the adding unit 45 stores the decoded image at an address in the image memory 32, the address corresponding to the position of the tile currently being processed, the position being indicated by the tile information variable-length-decoded by the variable length decoding unit 30.

After the decoding of all the tiles in the picture is completed, and one picture of decoded image is written in the image memory 32 (step ST30), the loop filter unit 33 carries out a predetermined filtering process on the one picture of decoded image, and stores the decoded image on which the loop filter unit carries out the filtering process in the motion-compensated prediction frame memory 34 (step ST31). This decoded image is a reference image for motion-compensated prediction, and is also a reproduced image.

As can be seen from the above description, in accordance with this Embodiment 1, the tile partitioning unit 1 that partitions an inputted image into tiles each having a specified size and outputs the tiles, the encoding controlling unit 2 that determines an upper limit on the number of hierarchical layers when a coding block, which is a unit to be processed at a time when a prediction process is carried out, is hierarchically partitioned, and also determines a coding mode for determining an encoding method for each coding block, the block partitioning unit 10 that partitions a tile outputted from the tile partitioning unit 1 into coding blocks each having a predetermined size and also partitions each of the coding blocks hierarchically until the number of hierarchical layers reaches the upper limit on the number of hierarchical layers which is determined by the encoding controlling unit 2, the prediction image generator (the intra prediction unit 12 and motion-compensated prediction unit 13) that carries out a prediction process on a coding block obtained through the partitioning by the block partitioning unit 10 to generate a prediction image in the coding mode determined by the encoding controlling unit 2, the subtracting unit 14 that generates a difference image between the coding block obtained through the partitioning by the block partitioning unit 10, and the prediction image generated by the prediction image generator, and the transformation/quantization unit 15 that compresses the difference image generated by the subtracting unit 14 and outputs compressed data about the difference image are disposed, and the variable length encoding unit 7 is constructed in such a way as to variable-length-encode the compressed data outputted from the transformation/quantization unit 15 and the coding mode determined by the encoding controlling unit, and also variable-length-encode the tile information showing the size and the position in the inputted image of each of the tiles outputted from the tile partitioning unit 1 to generate a bitstream into which encoded data about the compressed data, encoded data about the coding mode, and encoded data about the tile information are multiplexed. Therefore, there is provided an advantage of, even when the size of an inputted image is not an integral multiple of a pixel number defined for HDTV, being able to utilize an input interface, equipment, etc. for use in HDTV in the above-mentioned device.

More specifically, according to this Embodiment 1, even when the size of a tile which is an inputted image is an integral multiple of the pixel number defined for HDTV, the tile partitioning unit 1 of the video encoding device can partition the picture into tiles each having an arbitrary number of pixels. Therefore, there is provided an advantage of being able to utilize an input interface, equipment, etc. for use in HDTV in the above-mentioned device regardless of the preset size of a macroblock. Further, by partitioning a picture which is an inputted image into a plurality of tiles and adaptively determining an upper limit on the number of hierarchical layers for partitioning for each of the tiles according to the characteristics of a local motion in the tile, or the like, encoding can be carried out with an improved degree of coding efficiency.

Because the variable length decoding unit 30 of the video decoding device according to this Embodiment 1 decodes the size and the position information in the picture of each tile from the bitstream which is generated by partitioning the picture into a plurality of tiles and carrying out encoding, the variable length decoding unit can decode the above-mentioned bitstream correctly. Further, because the variable length decoding unit 30 decodes the upper limit on the number of hierarchical layers for partitioning or the like, which is a parameter associated with a tile, from the above-mentioned bitstream on a per tile basis, the variable length decoding unit can correctly decode the bitstream which is encoded with a degree of coding efficiency which is improved by adaptively determining the upper limit on the number of hierarchical layers for partitioning for each of the tiles.

Embodiment 2.

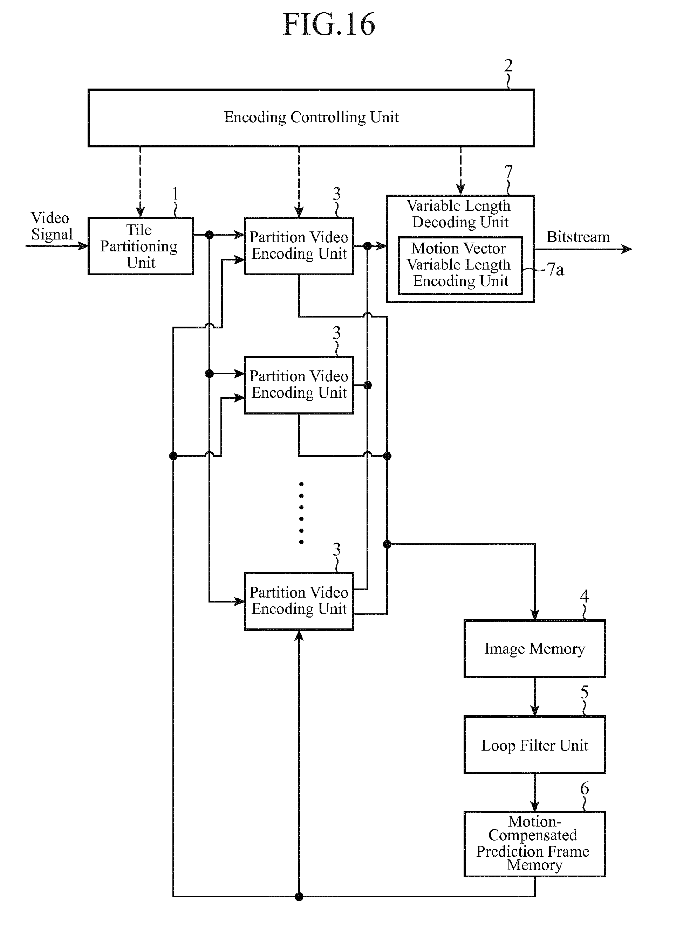

Although the video encoding device in which the single partition video encoding unit 3 is mounted and sequentially processes each tile outputted from the tile partitioning unit 1 in turn is shown in above-mentioned Embodiment 1, the video encoding device can alternatively include a plurality of partition video encoding units 3 (tile encoding devices), as shown in Fig. 16. In this case, the plurality of partition video encoding units 3 can carry out processes on the plurality of tiles obtained through the partitioning by the tile partitioning unit 1 in parallel. Also in the case of this Embodiment 2, because the tile partitioning unit 1 can partition a picture into tiles each having an arbitrary number of pixels, like that according to above-mentioned Embodiment 1, the tile partitioning unit can partition the picture into equal tiles even when the size of the picture is not an integral multiple of a set macroblock size. Therefore, the load on the encoding process on each tile is made to be uniform, and the parallelization efficiency can be improved.

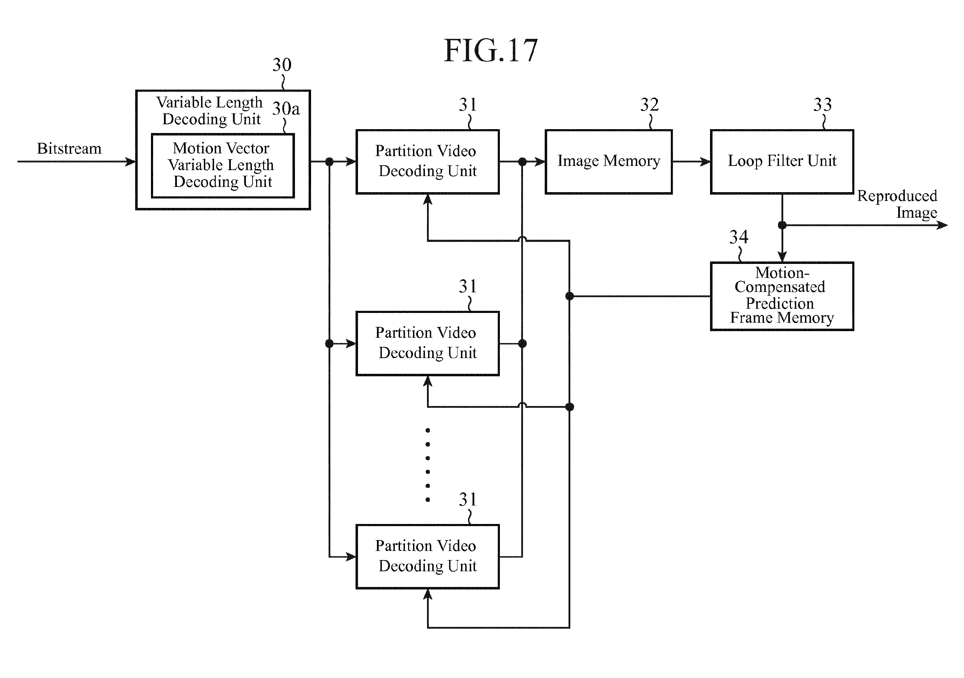

Although the video decoding device in which the single partition video decoding unit 31 is mounted and sequentially processes each tile is shown in above-mentioned Embodiment 1, the video decoding device can alternatively include a plurality of partition video decoding units 31 (tile decoding devices), as shown in Fig. 17. In this case, the plurality of partition video decoding units 31 can carry out processes on the plurality of tiles in parallel.

While the invention has been described in its preferred embodiments, it is to be understood that an arbitrary combination of two or more of the above-mentioned embodiments can be made, various changes can be made in an arbitrary component according to any one of the above-mentioned embodiments, and an arbitrary component according to any one of the above-mentioned embodiments can be omitted within the scope of the invention.

INDUSTRIAL APPLICABILITY

As mentioned above, because the video encoding device, the video decoding device, the video encoding method, and the video decoding method in accordance with the present invention make it possible to utilize an input interface, equipment, etc. for use in HDTV in the above-mentioned device when the size of an inputted image is an integral multiple of the pixel number defined for HDTV, the video encoding device and the video encoding method are suitable for use as a video encoding device for and a video encoding method of compression-encoding and transmitting an image, and the video decoding device and the video decoding method are suitable for use as a video decoding device for and a video decoding method of decoding encoded data transmitted by a video encoding device into an image.

EXPLANATIONS OF REFERENCE NUMERALS

1 tile partitioning unit (tile partitioner), 2 encoding controlling unit (encoding controller), 3 partition video encoding unit (tile encoding device), 4 image memory, 5 loop filter unit, 6 motion-compensated prediction frame memory, 7 variable length encoding unit (variable length encoder), 7a motion vector variable length encoding unit, 10 block partitioning unit (block partitioner), 11 select switch, 12 intra prediction unit (prediction image generator), 13 motion-compensated prediction unit (prediction image generator), 14 subtracting unit (image compressor), 15 transformation/quantization unit (image compressor), 16 inverse quantization/inverse transformation unit, 17 adding unit, 18 memory for intra prediction, 21 motion vector predicted vector candidate calculating unit, 22 motion vector predicted vector determining unit, 23 motion vector difference calculating unit, 24 entropy encoding unit, 30 variable length decoding unit (variable length decoder), 30a motion vector variable length decoding unit, 31 partition video decoding unit (tile decoding device), 32 image memory (decoded image storage), 33 loop filter unit, 34 motion-compensated prediction frame memory, 41 select switch, 42 intra prediction unit (prediction image generator), 43 motion compensation unit (prediction image generator), 44 inverse quantization/inverse transformation unit (decoded image generator), 45 adding unit (decoded image generator), 46 memory for intra prediction, 51 entropy decoding unit, 52 motion vector predicted vector candidate calculating unit, 53 motion vector predicted vector determining unit, 54 motion vector calculating unit.

**Claims**

1. A video encoding device comprising:

   a tile partitioner partitioning an inputted image into tiles each of which is a rectangular region having a specified size and outputs said tiles;
   an encoding controller determining an upper limit on a number of hierarchical layers when a coding block which is a unit to be processed at a time when a prediction process is carried out is hierarchically partitioned, and also determining a coding mode for determining an encoding method for each coding block;
   a block partitioner partitioning a tile outputted from said tile partitioner into coding blocks each having a predetermined size and also partitioning each of said coding blocks hierarchically until the number of hierarchical layers reaches the upper limit on the number of hierarchical layers which is determined by said encoding controller;
   a prediction image generator carrying out a prediction process on a coding block obtained through the partitioning by said block partitioner to generate a prediction image in the coding mode determined by said encoding controller;
   an image compressor compressing a difference image between the coding block obtained through the partitioning by said block partitioner and the prediction image generated by said prediction image generator, and outputting compressed data about said difference image; and
   a variable length encoder variable-length-encoding the compressed data, which are outputted from said image compressor, and the coding mode determined by said encoding controller and also variable-length-encoding tile information showing a size of each of the tiles outputted from said tile partitioner and a position of each of said tiles in said inputted image to generate a bitstream into which encoded data about said compressed data, encoded data about said coding mode, and encoded data about said tile information are multiplexed.

2. The video encoding device according to claim 1, wherein said video encoding device includes a plurality of tile encoding devices each including the block partitioner, the prediction image generator, and the image compressor, and the plurality of tile encoding devices carry out processes on the tiles outputted from the tile partitioner in parallel.

3. A video decoding device comprising:

   a variable length decoder variable-length-decoding tile information from encoded data multiplexed into a bitstream and variable-length-decodes compressed data and a coding mode which are associated with each of coding blocks into which a tile having a size shown by said tile information is hierarchically partitioned;
   a prediction image generator carrying out a prediction process on the coding block to generate a prediction image in the coding mode associated with said coding block, the coding mode being variable-length-decoded by said variable length decoder;
   a decoded image generator generating a pre-compressed difference image from the compressed data associated with the coding block, the compressed data being variable-length-decoded by said variable length decoder, and adding said difference image and the prediction image generated by said prediction image generator to generate a decoded image; and
   a decoded image storage storing the decoded image generated by said decoded image generator at an address corresponding to a position of the tile, the position being indicated by the tile information variable-length-decoded by said variable length decoder.

4. The video decoding device according to claim 3, wherein said video decoding device includes a plurality of tile decoding devices each including the prediction image generator and the decoded image generator, and the plurality of tile decoding devices carry out processes on tiles in parallel.

**5.** A video encoding method comprising:

a tile partitioning processing step of a tile partitioner partitioning an inputted image into tiles each of which is a rectangular region having a specified size and outputting said tiles;

an encoding control processing step of an encoding controller determining an upper limit on a number of hierarchical layers when a coding block which is a unit to be processed at a time when a prediction process is carried out is hierarchically partitioned, and also determining a coding mode for determining an encoding method for each coding block;

a block partitioning processing step of a block partitioner partitioning a tile outputted in said tile partitioning processing step into coding blocks each having a predetermined size, and also partitioning each of said coding blocks hierarchically until the number of hierarchical layers reaches the upper limit on the number of hierarchical layers which is determined in said encoding control processing step;

a prediction image generation processing step of a prediction image generator carrying out a prediction process on a coding block obtained through the partitioning in said block partitioning processing step to generate a prediction image in the coding mode determined in said encoding control processing step;

an image compression processing step of an image compressor compressing a difference image between the coding block obtained through the partitioning in said block partitioning processing step and the prediction image generated in said prediction image generation processing step, and outputting compressed data about said difference image; and

a variable length coding process step of a variable length encoder variable-length-encoding the compressed data, which are outputted in said image compression processing step, and the coding mode determined in said encoding control processing step and also variable-length-encoding tile information showing a size of each of the tiles outputted in said tile partitioning processing step and a position of each of said tiles in said inputted image to generate a bitstream into which encoded data about said compressed data, encoded data about said coding mode, and encoded data about said tile information are multiplexed.

**6.** A video decoding method comprising:

a variable length decoding processing step of a variable length decoder variable-length-decoding tile information from encoded data multiplexed into a bitstream and variable-length-decoding compressed data and a coding mode which are associated with each of coding blocks into which a tile having a size shown by said tile information is hierarchically partitioned;

a prediction image generation processing step of a prediction image generator carrying out a prediction process on the coding block to generate a prediction image in the coding mode associated with said coding block, the coding mode being variable-length-decoded in said variable length decoding processing step;

a decoded image generation processing step of a decoded image generator generating a pre-compressed difference image from the compressed data associated with the coding block, the compressed data being variable-length-decoded in said variable length decoding processing step, and adding said difference image and the prediction image generated in said prediction image generation processing step to generate a decoded image; and

a decoded image storing step of a decoded image storage storing the decoded image generated in said decoded image generation processing step at an address corresponding to a position of the tile, the position being indicated by the tile information variable-length-decoded in said variable length decoding processing step.

**Amended claims under Art. 19.1 PCT**

**1.** A video decoding device comprising:

a variable length decoder variable-length-decoding tile information from encoded data multiplexed into a bitstream and variable-length-decoding compressed data and a coding mode which are associated with each of coding blocks into which a tile having a size shown by said tile information is hierarchically partitioned; and

a decoded image storage storing a decoded image generated by adding a difference image generated from the compressed data associated with said coding block and a prediction image generated by carrying out a prediction process on said coding block in the coding mode associated with said coding block at an address corresponding to a position of the tile, the position being indicated by the tile information variable-length-decoded by said variable length decoder.

**2.** (added) The video decoding device according to claim 1, wherein said video decoding device includes a prediction image generator carrying out a prediction process on the coding block to generate the prediction image in the coding mode associated with said coding block, the coding mode being variable-length-decoded by said variable length decoder, and a decoded image generator generating the pre-compressed difference image from the compressed data associated with said coding block, and adding said difference image and the prediction image generated by said prediction image generator to generate the decoded image.

**3.** The video decoding device according to claim 2, wherein said video decoding device includes a plurality of tile decoding devices each including said prediction image generator and said decoded image generator, and the plurality of tile decoding devices carry out processes on tiles in parallel.

**4.** (amended) A video encoding device comprising:

a tile partitioner partitioning an inputted image into tiles each of which is a rectangular region having a specified size ;

an encoding controller determining an upper limit on a number of hierarchical layers when a coding block which is a unit to be processed at a time when a prediction process is carried out is hierarchically partitioned, and also determining a coding mode for determining an encoding method for each coding block;

a block partitioner partitioning a tile obtained through the partitioning by said tile partitioner into coding blocks each having a predetermined size and also partitioning each of said coding blocks hierarchically until the number of hierarchical layers reaches the number of hierarchical layers which is, as the upper limit, determined by said encoding controller; and

a variable length encoder variable-length-encoding compressed data, which are obtained by compressing a difference image between a prediction image generated by carrying out a prediction process on a coding block obtained through the partitioning by said block partitioner in the coding mode determined by said encoding controller and the coding block obtained through the partitioning by said block partitioner , and the coding mode determined by said encoding controller, and also variable-length-encoding tile information showing a size of each of the tiles obtained through the partitioning by said tile partitioner and a position of each of said tiles in said inputted image to generate a bitstream into which encoded data about said compressed data, encoded data about said coding mode, and encoded data about said tile information are multiplexed.

**5.** (added) The video encoding device according to claim 4, wherein said video encoding device include a prediction image generator carrying out a prediction process on the coding block obtained through the partitioning by said block partitioner to generate the prediction image in the coding mode determined by said encoding controller, and an image compressor compressing the difference image between the coding block obtained through the partitioning by said block partitioner and the prediction image generated by said prediction image generator, and outputting the compressed data about said difference image.

**6.** The video encoding device according to claim 5, wherein said video encoding device includes a plurality of tile encoding devices each including said block partitioner, said prediction image generator, and said image compressor, and the plurality of tile encoding devices carry out processes on the tiles outputted from the tile partitioner in parallel.

**7.** A video decoding method comprising:

a variable length decoding processing step of a variable length decoder variable-length-decoding tile information from encoded data multiplexed into a bitstream and variable-length-decoding compressed data and a coding mode which are associated with each of coding blocks into which a tile having a size shown by said tile information is hierarchically partitioned;

a prediction image generation processing step of a prediction image generator carrying out a prediction process on the coding block to generate a prediction image in the coding mode associated with said coding block, the coding mode being variable-length-decoded in said variable length decoding processing step;

a decoded image generation processing step of a decoded image generator generating a pre-compressed difference image from the compressed data associated with the coding block, the compressed data being variable-length-decoded in said variable length decoding processing step, and adding said difference image and the prediction image generated in said prediction image generation processing step to generate a decoded image; and

a decoded image storing step of a decoded image storage storing the decoded image generated in said decoded image generation processing step at an address corresponding to a position of the tile, the position being indicated by the tile information variable-length-decoded in said variable length decoding processing step.

**8.** A video encoding method comprising:

a tile partitioning processing step of a tile partitioner partitioning an inputted image into tiles each of which is a rectangular region having a specified size and outputting said tiles;

an encoding control processing step of an encoding controller determining an upper limit on a number of hierarchical layers when a coding block which is a unit to be processed at a time when a prediction process is carried out is hierarchically partitioned, and also determining a coding mode for determining an encoding method for each coding block;

a block partitioning processing step of a block partitioner partitioning a tile outputted in said tile partitioning processing step into coding blocks each having a predetermined size, and also partitioning each of said coding blocks hierarchically until the number of hierarchical layers reaches the upper limit on the number of hierarchical layers which is determined in said encoding control processing step;

a prediction image generation processing step of a prediction image generator carrying out a prediction process on a coding block obtained through the partitioning in said block partitioning processing step to generate a prediction image in the coding mode determined in said encoding control processing step;

an image compression processing step of an image compressor compressing a difference image between the coding block obtained through the partitioning in said block partitioning processing step and the prediction image generated in said prediction image generation processing step, and outputting compressed data about said difference image; and

a variable length coding process step of a variable length encoder variable-length-encoding the compressed data, which are outputted in said image compression processing step, and the coding mode determined in said encoding control processing step and also variable-length-encoding tile information showing a size of each of the tiles outputted in said tile partitioning processing step and a position of each of said tiles in said inputted image to generate a bitstream into which encoded data about said compressed data, encoded data about said coding mode, and encoded data about said tile information are multiplexed.

**9.** (added) A video decoding device comprising:

a variable length decoder variable-length-decoding encoded data multiplexed into a bitstream into compressed data and a coding mode associated with each of coding blocks obtained through partitioning;

a prediction image generator carrying out a prediction process on the coding block to generate a prediction image in the coding mode associated with said coding block, the coding mode being variable-length-decoded by said variable length decoder; and

a decoded image generator generating a pre-compressed difference image from the compressed data associated with said coding block and adds said difference image and the prediction image generated by said prediction image generator to generate a decoded image.

# FIG.1

Encoding Controlling Unit 2

Video Signal → Tile Partitioning Unit 1 → Partition Video Encoding Unit 3 → Variable Length Encoding Unit 7 → Bitstream

Motion Vector Variable Length Encoding Unit 7a

Image Memory 4

Loop Filter Unit 5

Motion-Compensated Prediction Frame Memory 6

## FIG.2

# FIG.3

EP 2 775 716 A1

Motion Vector Of Already-Encoded
Neighboring Partition And
Motion Vector Of Reference Frame

Motion Vector

| 21 | 22 | 23 |
|---|---|---|
| Motion Vector Predicted Vector Candidate Calculating Unit | Motion Vector Predicted Vector Determining Unit | Motion Vector Difference Calculating Unit |

Predicted Vector

Difference Vector

24

Predicted Vector Index → Entropy Encoding Unit → Motion Vector Information Code Word

Motion Vector Variable Length Encoding Unit

7a

FIG.4

```
                    ( Start )
                        |
                        v           ST1
          +-------------------------------+
          |   Determine Size Of Each Tile |
          +-------------------------------+
                        |
                        v           ST2
          +-------------------------------+
          |  Calculate Position of Each Tile |
          +-------------------------------+
                        |
                        v           ST3
          +-------------------------------+
          |   Partition Picture Into Tiles |
          +-------------------------------+
                        |
                        v           ST4
          +-------------------------------+
          |   Determine Largest Size And   |
          |   Upper Limit On Number Of     |
          |   Hierarchical Layers Of       |
          |   Coding Target Block          |
          +-------------------------------+
                        |
                        v           ST5
          +-------------------------------+
          |     Determine Coding Mode      |
          +-------------------------------+
                        |
                        v           ST6
                  < INTRA? >---- NO
                    | YES            |
```

ST14 — To Next Coding Block

ST7 — Intra Prediction Process

ST8 — Inter Prediction Process

ST9 — Generate Prediction Difference Signal

ST10 — Transformation And Quantization Process

ST11 — Inverse Quantization And Inverse Transformation Process

ST13 — Are All Coding Target Blocks Processed? — NO

ST12 — Decoding Addition Process

ST15 — Variable Length Encoding Process (YES)

ST16 — Loop Filtering Process

( End )

# FIG.5

Bitstream → [30a / 30 Variable Length Decoding Unit (Motion Vector Variable Length Decoding Unit)] → [31 Partition Video Decoding Unit] → [32 Image Memory] → [33 Loop Filter Unit] → Reproduced Image

[34 Motion-Compensated Prediction Frame Memory]

EP 2 775 716 A1

## FIG.6

Bitstream

30 Variable Length Decoding Unit

30a Motion Vector Variable Length Decoding Unit

Prediction Difference Coding Parameter

Compressed Data

44 Inverse Quantization/ Inverse Transformation Unit

Decoding Prediction Difference Signal

45 (+)

Decoded Image

Intra Prediction Image

Coding Mode

41

Intra Prediction Parameter

Inter Prediction Parameter Motion Vector

Intra Prediction Parameter Or Inter Prediction Parameter Motion Vector

42 Intra Prediction Unit

46 Memory For Intra Prediction

43 Motion Compensation Unit

Inter Prediction Image

31 Partition Video Decoding Unit

32 Image Memory

33 Loop Filter Unit

Reproduced Image

34 Motion-Compensated Prediction Frame Memory

# FIG.7

Motion Vector Of Already-Decoded Neighboring Partition And
Motion Vector Of Reference Frame

52      53      54

Motion Vector Predicted Vector Candidate Calculating Unit

Motion Vector Predicted Vector Determining Unit

Predicted Vector

Motion Vector Calculating Unit

Motion Vector

51

Entropy Decoding Unit

Motion Vector Information Code Word

Predicted Vector Index

Difference Vector

Motion Vector Variable Length Decoding Unit

30a

EP 2 775 716 A1

# FIG.8

```
                    ┌──────────────┐
                    │    Start     │
                    └──────────────┘
                           │
                           ▼         ST21
        ┌──────────────────────────────────┐
        │  Variable Length Decoding Process │
        └──────────────────────────────────┘
                           │
                           ▼         ST22
        ┌──────────────────────────────────┐
        │    Decode Partitioning State of   │
        │       Largest Coding Block        │
        └──────────────────────────────────┘
                           │
                           ▼         ST23
        ┌──────────────────────────────────┐
        │    Specify Decoding Target Block  │
        └──────────────────────────────────┘
                           │
                           ▼         ST24
        ┌──────────────────────────────────┐
        │   Variable Length Decoding Process│
        │ (Coding Mode, Prediction Parameter,│
        │    Prediction Difference Coding   │
        │  Parameter, And Compressed Data)  │
        └──────────────────────────────────┘
```

ST25

INTRA? — NO

YES

ST26 — Intra Prediction Process

ST27 — Inter Prediction Process

ST28 — Inverse Quantization And Inverse Transformation Process

ST29 — Decoding Addition Process

ST30 — Are All Decoding Target Blocks Processed? — NO

YES

ST31 — Loop Filtering Process

End

# FIG.9

4K(3840×2160)
1920

1080

FIG.10

0th Hierarchical Layer $L^0$ $M^0$

1st Hierarchical Layer $L^1=L^0/2$ $M^1=M^0/2$

2nd Hierarchical Layer $L^2=L^1/2$ $M^2=M^1/2$

3rd Hierarchical Layer $L^3=L^2/2$ $M^3=M^2/2$

To 4th Hierarchical Layer

EP 2 775 716 A1

FIG.11

(a)

$L^0$

$M^0$

(b)

0th
Hierarchical
Layer

1st
Hierarchical
Layer

2nd
Hierarchical
Layer

3rd
Hierarchical
Layer

4th
Hierarchical
Layer

EP 2 775 716 A1

# FIG.12

| Intra Prediction Mode Index | Intra Prediction Mode |
|---|---|
| 0 | Vertical Prediction |
| 1 | Horizontal Prediction |
| 2 | Average Prediction |
| 3 to N-1 | Diagonal Prediction |

N: Number Of Intra Prediction Modes

Directional Prediction In Case Of N=9
(8 Modes)

Directional Prediction In Case Of N=17
(16 Modes)

Directional Prediction In Case Of N=33
(32 Modes)

# FIG.13

In Case Of $l_i^n = m_i^n = 4$

Reference Pixel

$m_i^n$

Prediction Target Pixel $(x, y)$

Pixel Used for Prediction
(Pixel of Adjacent Already-Encoded Partition)

Prediction Direction Vector $\upsilon_p = (dx, dy)$

$l_i^n$

# FIG.14

B$_2$    B$_1$   B$_0$

Coding Target Partition P$_i^n$

A$_1$

A$_0$

# FIG.15

Coding Target Tile

Coding Target Partition $P_i^n$

Partition $P_{i\ co\text{-}located}^n$ Co-located At $P_i^n$ In Reference Frame

Reference Frame

Tile Boundary Of Reference Frame

$V_0$  $V_1$  $C_0$  $C_1$

# FIG.16

# FIG.17

EP 2 775 716 A1

# FIG.18

Tile 0
(Address 0)

| 0 | 1 | 2 | 3 | 4 | 5 |
|---|---|---|---|---|---|
| 16 | | | | | |
| 32 | | | | | |
| 48 | | | | | |
| 64 | | | | | |
| 80 | | | | | |
| 96 | | | | |102 |

Tile 1
(Address 102)

Largest Coding Block

Block of Tile Step Size (Small Block)

▬ ▬ ▬ Tile Boundary

EP 2 775 716 A1

## INTERNATIONAL SEARCH REPORT

International application No.

PCT/JP2012/073067

### A. CLASSIFICATION OF SUBJECT MATTER
*H04N7/32*(2006.01)i

According to International Patent Classification (IPC) or to both national classification and IPC

### B. FIELDS SEARCHED

Minimum documentation searched (classification system followed by classification symbols)
H04N7/24-7/68

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | Arild Fuldseth et al., Tiles, Joint Collaborative Team on Video Coding (JCT-VC) of ITU-T SG16 WP3 and ISO/IEC JTC1/SC29/WG11 6th Meeting: Torino, IT, 2011.07.14, [JCTVC-F335] | 1-6 |
| A | Arild Fuldseth et al., Tiles, Joint Collaborative Team on Video Coding (JCT-VC) of ITU-T SG16 WP3 and ISO/IEC JTC1/SC29/WG11 5th Meeting: Geneva, CH, 2011.03.16, [JCTVC-E408] | 1-6 |
| P,A | Kazuo Sugimoto et al., New definition for Tile/slice boundary, Joint Collaborative Team on Video Coding (JCT-VC) of ITU-T SG16 WP3 and ISO/IEC JTC1/SC29/WG11 7th Meeting: Geneva, CH, 2011.11.21, [JCTVC-G453] | 1-6 |

☐ Further documents are listed in the continuation of Box C.   ☐ See patent family annex.

| | | |
|---|---|---|
| * | Special categories of cited documents: | |
| "A" | document defining the general state of the art which is not considered to be of particular relevance | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 27 November, 2012 (27.11.12) | 11 December, 2012 (11.12.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ARILD FULDSETH ; MICHAEL HOROWITZ ; SHI-LIN XU ; ANDREW SEGALL ; MINHUA ZHOU.** JCTVC-F335: Tiles. *Joint Collaborative Team on Video Coding (JCT-VC) of ITU-T SG16 WP3 and ISO/IEC JTC1/SC29/WG11 6th Meeting: Torino, IT,* 14 July 2011